# EUROPÄISCHE PATENTSCHRIFT

(11) **EP 3 612 505 B1**
(45) Veröffentlichungstag und Bekanntmachung des Hinweises auf die Patenterteilung: **09.10.2024**
(21) Anmeldenummer: 18814835.7
(22) Anmeldetag: 30.11.2018
(51) Int. Cl.: C05B 17/00, C05F 3/00, C05F 5/00, C05F 7/00, C01B 25/32, C05D 9/00, C01B 25/26, C05D 9/02

(54) **PEDOSPHÄRENVERBESSERNDE GRANULATE, HERSTELLUNGSVERFAHREN UND VERWENDUNG**
PEDOSPHERE-IMPROVING GRANULATE, METHOD FOR PRODUCING SAME, AND USE THEREOF
GRANULÉS AMÉLIORANT LA PÉDOSPHÈRE, PROCÉDÉ DE PRÉPARATION ET UTILISATION

(30) Priorität: 01.02.2018 DE 102018102226; 05.03.2018 DE 102018104921
(43) Veröffentlichungstag der Anmeldung: 26.02.2020
(60) Teilanmeldung: 19219229.2
(73) Patentinhaber: Pontes pabuli GmbH, 04107 Leipzig (DE)
(72) Erfinder: BOHNDICK, Fred, 39638 Gardelegen OT Jävenitz (DE); HOGER, Matthias, 04571 Rötha OT Espenhain (DE)
(74) Vertreter: Hertin und Partner Rechts- und Patentanwälte PartG mbB
(86) Internationale Anmeldenummer: PCT/EP2018/083107
(87) Internationale Veröffentlichungsnummer: WO 2019/149405

(56) Entgegenhaltungen:
- EP-A1- 3 037 396
- EP-A1- 3 293 165
- DE-A1- 102016 112 300
- DE-B3- 102014 108 199
- US-A1- 2016 130 191

## Beschreibung

Die Erfindung betrifft ein pedosphärenverbesserndes Granulat, ein Herstellungsverfahren dafür, sowie ein beschichtetes oder unbeschichtetes Düngergranulat, das zur Nährstoffzufuhr in der Land-, Forstwirtschaft und/oder im Gartenbau verwendet werden kann.

### Stand der Technik:

Durch landwirtschaftliche Nutzung werden dem Boden mineralische Rohstoffe, wie beispielsweise phosphorhaltige Verbindungen, entzogen, welche durch anschließende Zufuhr mineralischer Dünger wieder ausgeglichen werden müssen. Mit der stofflichen und energetischen Nutzung von Biomasse, wie beispielsweise aus Haushaltsabfallen oder Klärschlamm, ist ein Entzug von Nährstoffen und erhebliche Mengen an organischer Substanz aus den natürlichen Stoffkreisläufen verbunden. Die Erhaltung der Fruchtbarkeit des Bodens durch den Einsatz von künstlichem Mineraldünger aus fossilen Ressourcen ist ökologisch kritisch zu bewerten, zum einen aufgrund des umweltzerstörerischen Abbaus und zum anderen aufgrund des Schwermetalleintrags auf die Böden durch Mineraldünger. Phosphor ist ein limitierter Rohstoff und seine effiziente Nutzung für einen fruchtbaren Boden vor dem Hintergrund einer wachsenden Weltbevölkerung ist von großer Bedeutung. Unter Gesichtspunkten der Nachhaltigkeit rückt die Schließung von natürlichen Nährstoffkreisläufen immer mehr in den Vordergrund und bietet zudem eine einheimische bisher nur bedingt genutzte Rohstoffquelle.

Organische Reststoffe, wie beispielsweise Klärschlamm, Gärreste oder Gülle, sind prinzipiell eine kostengünstige und nachhaltige Alternative zu mineralischen Düngern und damit zur Schließung des Nährstoffkreislaufs. So werden diese organischen Reststoffe zum Teil auch noch immer direkt auf Felder ausgebracht. Seit geraumer Zeit sinkt die Akzeptanz für diesen Verwertungsweg jedoch progressiv, da das direkte Ausbringen zu unerwünschter Geruchsbelästigung führt und die hiermit verbundenen Kreisläufe in Verdacht stehen, zu einer unerwünschten Aufkonzentrierung bestimmter Schadstoffe zu führen, wie beispielsweise perfluorierter Tenside (PFT) und unterschiedliche Schwermetalle. Klärschlamm, der keiner hygienisierenden Behandlung unterworfen wurde, kann zudem eine Vielzahl seuchen- und phytohygienisch relevanter Krankheitserreger enthalten, wie Bakterien, Viren, Parasiten und Wurmeier. Sollen die organischen Reststoffe in der Landwirtschaft verwertet werden, so besteht grundsätzlich die Gefahr, dass Krankheitserreger über Nahrung und Futtermittel zu Mensch und Tier gelangen und diese damit gefährden.

Aktuell gewinnt die thermische Verwertung dieser organischen Reststoffe weiter an Bedeutung. Aschen aus der thermischen Verwertung und/oder Verbrennung organischer Reststoffe sind aufgrund des hohen Gehalts an Nährstoffen, wie beispielsweise Phosphor (P), geeignete Rohstoffquellen. Allerdings werden auch die Schwermetalle aufkonzentriert. Aufgrund der schlechten Pflanzenverfügbarkeit des in den Aschen enthaltenen Phosphors (P) sowie der Schadstoffgehalte ist eine direkte Verwendung der Aschen als Düngemittel kaum möglich. Deshalb werden aktuell solche Aschen zumeist deponiert oder im Landschaftsbau verwendet und stehen somit den Stoffkreisläufen nicht mehr als Rohstoffquelle zur Verfügung.

Im Stand der Technik sind unterschiedliche Verfahren zur stofflichen Verwertung von phosphorhaltigen Aschen, beispielsweise aus Klärschlamm, bekannt. Die bekannten Verfahren basieren auf dem Rohstoff Asche, wobei der P-Gehalt in der Asche möglichst hoch sein sollte. Die Verfahren unterscheiden sich bezüglich der P-Abscheidung (Säure und Fällmittel), dem Recyclingprodukt und der Art der Schwermetallabscheidung. Die Verfahren zur Gewinnung von Phosphat aus Klärschlammaschen können allgemein in thermochemische, thermoelektrische und nasschemische Ansätze untergliedert werden, wobei die thermochemischen Verfahren üblicherweise unterhalb des Ascheschmelzpunktes <1.000°C durchgeführt werden und die nasschemischen Verfahren oberhalb des Ascheschmelzpunktes >1.000 °C.

Thermochemische oder thermoelektrische Verfahren nutzen im Grunde hohe Temperaturen, um flüchtige Schwermetalle, wie As, Cd, Hg und Zn, gegebenenfalls mit Unterstützung durch ein Alkalisalz oder Chlorgas, in die Gasphase zu bringen und auf diese Weise abzuscheiden. Die thermochemischen bzw. thermoelektrischen Verfahren sind verhältnismäßig energieaufwändig, erfordern eine komplexe Technologie und einen hohen Sicherheitsaufwand zur sicheren Handhabung. Die Löslichkeit der Phosphate in der resultierende schwermetallentfrachteten Asche entspricht einer herkömmlichen Klärschlammasche und ist allein daher ohne weitere Behandlung nicht als Düngemittel geeignet. Die chemische und mineralogische Zusammensetzung der entfrachteten Asche entspricht weitgehend dem verwendeten Klärschlamm bzw. der Klärschlammasche. Damit entspricht die Nährstoffzusammensetzung nicht dem benötigten boden- und pflanzenspezifischen Nährstoffbedarf. Die typischen Schwankungen von Klärschlamm bzw. Klärschlammasche werden im Verfahren nicht ausgeglichen, damit schwankt die Qualität des Produktes erheblich. Die Marktfähigkeit solcher Produkte ist zumindest als sehr schwierig einzustufen.

Bei den nasschemischen Verfahren werden zahlreiche unterschiedliche Konzepte verfolgt, wobei generell zwischen Verfahren, bei denen die Säure nur mit der Asche vermischt und daraus Düngemittel hergestellt wird, und Verfahren, bei welchem Phosphor aus der Asche extrahiert und damit in die flüssige Phase gebracht wird, unterschieden wird.

Die nasschemischen Verfahren, bei denen im Grunde nur Asche mit Säure insbesondere erdfeucht vermischt wird, um daraus Düngemittel herzustellen, sind wirtschaftlich und auch technisch gut beherrschbar. Dabei wird das weitgehend unlösliche Phosphat aus phosphathaltigen Aschen mittels Mineralsäure aufgeschlossen. Solch ein Verfahren ist beispielsweise aus DE 10 2010 034 042 B4 bekannt. Das Verfahren stellt durch das Mischen von Aschen aus der Klärschlamm-Monoverbrennung mit Mineralsäure mit Zusatz von Kalium- und/oder eines Stickstoffträgers ein Phosphat- bzw. Mehrnährstoff-Düngemittel her. Die Mineralsäure schließt dabei die schwerlöslichen Phosphatverbindungen in der Klärschlammasche auf. Dabei laufen die gewünschten Umwandlungsreaktionen und die Granulation weitgehend zeitgleich ab. Die Mischung, die Reaktion und die Granulation finden in einer Mischapparatur statt. Vorgeschlagen werden dazu Pflugscharmischer mit Messersatz, ein kontinuierlich arbeitender Durchlaufmischer oder ein Doppelwellenpaddelmischer. Bei dieser Art nasschemischer Verfahren, wie beispielsweise in DE 10 2010 034 042 beschrieben, ist die resultierende Nährstoffzusammensetzung an die Boden- und Pflanzenbedürfnisse anpassbar.

EP 3 293 165 beschreibt ein Verfahren zur Herstellung eines Düngemittelgranulats, wobei eine Suspension mindestens aus einem phosphathaltigen Sekundärrohstoff und mindestens einer Mineralsäure erzeugt wird, in der erzeugten Suspension die schwerlöslichen Phosphate des mindestens einen phosphathaltigen Sekundärrohstoffes zumindest teilweise gelöst und/oder zumindest teilweise in eine wasser- und/oder neutral-ammoniumcitratlösliche Phosphatphase umgewandelt werden und diese Suspension anschließend einer Granulation zugeführt wird.

US 2016/130191 A1 beschriebt ein Düngemittelgranulat besteht aus langsam freisetzenden (z.B. Struvit) und schnell freisetzenden Phosphorquellen.

DE 10 2016 112 300 A1 beschreibt ein Verfahren zur Düngemittelgewinnung aus phosphathaltigem Klärschlamm, wobei ein Teil des Phosphates aus dem Klärschlamm mittels Säureaufschluss gelöst und in einem oder mehreren Fällungsschritten in ein flüssiges Düngemittel abgeschieden wird.

DE 10 2014 108 199 B3 beschreibt ein thermisches Verfahren unter Einsatz von Alkali-Schwefel-Verbindungen im Rahmen eines Kalzinierungsverfahrens bei dem ein Rohmaterial mit einer Alkali-Schwefel-Verbindung kalziniert wird.

Jedoch werden in diesen Verfahren die Schwermetalle aus der Asche nicht abgeschieden, sondern gelangen vollständig in das Düngemittel und damit in den Nährstoffkreislauf. Derzeit herrscht entsprechend noch keine rechtliche Klarheit darüber, ob deswegen in solchen Verfahren nur die Aschen eingesetzt werden dürfen, die bereits selbst die Düngemittelverordnung einhalten. Zudem haben diese Verfahren erhebliche verfahrenstechnische Probleme bei der technischen Umsetzung, da beim Mischen der phosphathaltigen Aschen mit der Mineralsäure spontan ablaufende und zum Teil sehr exotherme Reaktionen stattfinden, die die gleichzeitige Granulation erheblich stören. Zudem ist das Gemisch aus Asche mit Säure oft besonders klebriges, was eine stabile Prozessführung deutlich erschwert und oft zu Prozessstörungen durch Anhaftung und Verstopfung von Anlagenteilen führt. Problematisch ist auch, dass Mineralsäuren sehr korrosiv sind und bei dieser Prozessführung viele Anlagenteile, zum Beispiel die Granuliereinheit, Trocknungseinheit oder Verbindungsstrecken, damit in Kontakt kommen und entsprechend geschädigt werden.

Bei anderen nasschemischen Verfahren, wie BioCon-, SEPHOS-, SESALPhos-, Tetraphos, PASCH- oder Leachphos-Verfahren, können die Schwermetalle zumindest teilweise abgeschieden werden, allerdings entstehen erhebliche Prozessrückstände. Auch EP 3 037 396 beschreibt die Möglichkeit der Schwermetallabscheidung in einem nasschemisches Verfahren zur Herstellung eines Düngemittels aus einer Asche oder einem Verkohlungsrückstand eines Schlamms aus einer Abwasserreinigung oder Abfallvergärung.

So sind beispielsweise Verfahren bekannt, bei denen aus Verbrennungsasche durch Aufschluss mit Mineralsäuren Phosphorsäure gewonnen wird, wobei aus der Aufschlusslösung oder aus der erzeugten Phosphorsäure Schwermetalle mittels Einsatzes von lonenaustauscherharzen entfernt werden. Ein Beispiel dafür ist die WO 00/50343. Bei diesem Verfahren wird die Verbrennungsasche mit Schwefelsäure aufgeschlossen. Dabei entsteht Phosphorsäure, die vom unlöslichen Rückstand (Prozessrückstand) getrennt wird und noch wesentlich mit Eisen und Schwermetallen verunreinigt ist. Zum Reinigen der Phosphorsäure wird nach diesem Verfahren eine Kombination von Ionenaustauscherfiltern eingesetzt. Insbesondere wird zur Entfernung von Eisen- und Schwermetallionen ein stark saurer Kationenaustauscher verwendet.

Aus CH 697083 ist ein Verfahren zur Rückgewinnung von Phosphor aus phosphorhaltigen Verbrennungsaschen bekannt, bei dem die in der Verbrennungsasche enthaltenen Phosphate durch einen Säureaufschluss in Lösung gebracht werden. Die vom unlöslichen Rückstand, vorzugsweise dem Prozessrückstand abgetrennte Lösung wird durch eine Flüssig-Flüssig-Extraktion gereinigt und es wird insbesondere Eisen entfernt. Vorzugsweise wird mit einem organischen Extraktionsmittel gereinigt. Aus dem von Eisen und anderen Schwermetallen gereinigten Raffinat werden Calciumphosphate gefällt.

Aus DE 102 06 347 ist ein Verfahren zur Gewinnung von Phosphorverbindungen aus Verbrennungsrückständen bekannt, bei dem der Verbrennungsasche zum Lösen der darin befindlichen Phosphatverbindungen verdünnte Mineralsäuren zugeführt und anschließend die unlöslichen Begleitkomponenten (Prozessrückstand) abgetrennt werden. Aus der entstandenen Phosphatlösung werden die Schwermetalle durch pH-Werteinstellung selektiv gefällt. Die gereinigte phosphathaltige Lösung wird einer Weiterverarbeitung zugeführt oder es wird das Phosphat daraus gefällt.

In EP 2 602 013 A1 wird ein Verfahren zur Rückgewinnung von Phosphorverbindungen aus phosphorhaltigen Sekundärrohstoffe beschrieben, wobei in dem Verfahren die in den phosphathaltigen Sekundärrohstoffen enthaltenen phosphorhaltigen Verbindungen in einem Aufschlussbehälter durch einen Säureaufschluss mit einer verdünnten Mineralsäure in Lösung gebracht werden, und durch Filtration ein Filterkuchen (Prozessrückstand) vom Filtrat abgetrennt wird, wobei das Filtrat einen pH-Wert von 0 bis 1,0 aufweist. Während oder unmittelbar nach dem Säureaufschluss oder in einen separaten Behälter zu dem Filtrat nach Abtrennung des Filterkuchens wird ein Opfermetall zugegeben, um Schwermetallkationen zu reduzieren, wobei das so entstandene metallische Schwermetall mittels Filtration zusammen mit dem Filterkuchen oder separat abgetrennt wird. Anschließend wird ein Aluminiumsalz zugegeben, der pH-Wert mit einer Base in einen Bereich von pH 2.1 bis 3.0 angehoben und das gefällte Produkt abgetrennt. Das gefällte Phosphorprodukt, d.h. das Aluminiumphosphat, kann nun entweder in die Düngemittelherstellung oder der thermischen Phosphorproduktion zugeführt werden. Es entsteht ein Aluminiumphosphat, welches erst zu einem boden- und pflanzenspezifischen Dünger weiterverarbeitet werden muss.

Aus dem Stand der Technik [J. Pinnekamp, "Phosphorrecycling - Ökologische und wirtschaftliche Bewertung verschiedener Verfahren und Entwicklung eines strategischen Verwertungskonzepts für Deutschland," 2011.] ist darüber hinaus ein Phosphorrückgewinnungsverfahren aus Klärschlammaschen namens SEASAL bekannt. Das Verfahren basiert auf einer achtstündigen Eluation der Klärschlammasche mit Salzsäure (HCl), wobei es zu einer Rücklösung von Calcium, Magnesium, Kalium und Schwermetallen kommt. Phosphor wird nur zu geringen Anteilen rückgelöst, vielmehr findet eine weitgehende Umwandlung der Calciumphosphate in Aluminiumphosphate statt. Calcium- als auch Aluminiumphosphate sind dabei beide schlecht pflanzenverfügbar und entsprechend als Dünger nicht brauchbar. Die nach einer Fest-Flüssig-Trennung zurückbleibende Asche wird in einem weiteren Behandlungsschritt ebenfalls 8 Stunden bei pH 13 eluiert. Phosphor und Aluminium gehen in Lösung und nach Abtrennung der Asche wird mittels Zugabe von Calciumchlorid Calciumphosphat gewonnen. Nachteil dieses Verfahrens ist, dass die Behandlungsschritte sehr zeitaufwendig sind. Der Phosphatphasen-Umwandlungsprozess mit Säure dauert ca. 8 Stunden, was eine sehr große Anlagendimensionierung erfordert. Zudem erfordert das Verfahren einen erheblichen Einsatz von Säuren, Laugen und Hilfsstoffen. Erst erfolgt eine Säurebehandlung, anschließend wird bei pH-Wert 13 eluiert und das gewonnen Filtrat mit CaCl2 danach gefällt. Auch fallen erhebliche Mengen an Abfall an. Das Phosphat wird lediglich aus der Asche herausgelöst und große Teile der Asche verbleiben als Abfall.

Weiterhin ist aus dem Stand der Technik [L. Hermann, "Rückgewinnung von Phosphor aus der Abwasserreinigung," Herausgegeben vom Bundesamt für Umwelt BAFU, Bern, 2009.] ein sogenanntes SEPHOS-Phosphorrecyclingverfahren bekannt. Bei diesem Verfahren wird die aluminium- oder eisenhaltige Asche mit Schwefelsäure versetzt und auf einen pH-Wert von pH ca. 1,5 gebracht. Der Phosphor wird so nahezu vollständig aus der Asche rückgelöst. In einem nächsten Schritt erfolgt die Abtrennung der flüssigen Phase. Das Filtrat wird stufenweise mit Natronlauge auf einen pH-Wert von ca. 3-4 angehoben und Aluminiumphosphat ausgefällt. Nachteil bei dieser Prozessführung ist, dass das Phosphat aus der Asche herausgelöst und von dem unlöslichen Ascherest abgetrennt wird. Dieser unlösliche Ascherest ist ein Abfallstoff, der teuer entsorgt werden muss. Bis zu dieser Prozessstufe bietet das Verfahren auch keine Möglichkeit, Schwermetalle abzuscheiden. Erst in der möglichen Weiterentwicklungsstufe dieses Verfahrens besteht eine Möglichkeit dazu. Dazu wird das Fällungsprodukt (Sephos Produkt = AIPO4) mit einem alkalischen Laugungsmittel auf einen pH-Wert von pH 12-14 angehoben, so dass Aluminium und Phosphor in Lösung gehen. Die Schwermetallverunreinigungen des Aluminiumphosphates werden unter diesen Bedingungen nicht rückgelöst und verbleiben im Fällungsschlammrest. Das Schlammwassergemisch wird zentrifugiert und die Schwermetalle somit abgetrennt. Dem Filtrat wird Calcium zudosiert, so dass Calciumphosphat ausfällt. Diese prinzipielle Möglichkeit zur Schwermetallabtrennung ist jedoch aufwendig und erfordert einen besonders hohen Einsatz an Chemikalien.

All diesen Verfahren ist gemein, dass durch Vermischen der Klärschlammasche mit Mineralsäure je nach Art und Konzentration der Mineralsäure sowie abhängig von der Prozessführung ein großer Teil des Phosphates der Asche gelöst werden, aber dennoch dabei ein erheblicher Anteil ungelöster Bestandteile zurückbleibt. Diese ungelösten Bestandteile sind Prozessrückständen, die teuer entsorgt werden müssen, obwohl auch darin noch Nährstoffkomponenten enthalten sind. Vorteilhaft bei diesen Verfahren ist hingegen, dass die gewonnene phosphathaltige Lösung zumindest teilweise von Schwermetallen befreit wird und diese Schwermetalle aus dem Prozess ausgeschleust werden. Allerdings wird bei diesen Verfahren anschließend die phosphathaltige Lösung sehr aufwendig und durch sehr komplexen Fällungs- bzw. Extraktionsprozessen weiterverarbeitet. Kostentreiber dabei ist der erhebliche Einsatz von zusätzlichen Chemikalien. Häufig entstehen dann Produkte, die nicht direkt zum Beispiel als Düngemittel verwendet werden können, sondern dann noch einmal weiterverarbeitet werden müssen.

Aus EP 3 037 396 A1 ist ein Verfahren zur Herstellung eines phosphathaltigen Düngemittels aus einer Asche oder einem Verkohlungsrückstand eines Schlamms aus einer Abwasserreinigung oder Abfallvergärung bekannt. Dabei wird eine Asche oder des Verkohlungsrückstands mit einer mineralischen Säure vermischt und Inkubation der resultierenden Suspension in einem ersten Gefäß eingehalten, danach erfolgen das Absondern von feuchten Feststoffen aus der Suspension und Ersetzen der abgesonderten Feststoffe durch weitere Asche oder weiteren Verkohlungsrückstand, das Vermischen der weiteren Asche oder des weiteren Verkohlungsrückstands mit der im ersten Gefäß verbleibenden mineralischen Säure und Inkubation der resultierenden Suspension in dem ersten Gefäß. Der abgesonderte Feststoff wird in ein zweites Gefäß überführt und dort mit einer pH-neutralen, basischen oder gepufferten wässrigen Flüssigkeit vermischt, anschließend wird ein Teils der durch das Vermischen entstandenen Flüssigkeit aus dem zweiten Gefäß abgetrennt, die darin enthaltener Schwermetallionen daraus abgesondert und dieser Flüssigkeit in das zweite Gefäß zurückgeführt. In EP 3 037 396 A1 wird somit im Prozessschritt 2 ein feuchter Feststoff abgetrennt, wobei die Lösung in Gefäß 1 verbleibt. Zu der verbleibenden Flüssigkeit im Gefäß 1 wird neue Asche zugeführt. Demnach wird in dem nachfolgenden Batch keine weitere Säure als Reaktionsmittel zugegeben. Damit sinkt die Säurestärke von Batch zu Batch und damit die Löse- bzw. Umwandlungspotential der Säure gegenüber dem Phosphat. Nachteilig ist damit bei diesem Verfahren, dass die Phosphatlöslichkeit der Asche allenfalls im ersten Batch ausreichend erhöht wird, bei jedem weiteren Batch sinkt die Löslichkeit bis letztlich keine Veränderung gegenüber der Ausgangsasche erfolgt.

Weiterhin sind im Stand der Technik pedosphärenverbessernde Granulate beschrieben, die jedoch oft nachteilhaft wirken. Viele dieser bekannten Strukturen haben zwar eine positive Wirkung auf das Pflanzenwachstum, allerdings ist dieses verbunden mit negativen Auswirkungen auf Kleinstlebewesen und Mikroorganismen. Es ist mehrfach beobachtet worden, dass durch Granulate des Standes der Technik beispielsweise die Anzahl der Regenwürmer zurückgeht und weiterhin weniger stickstoffassimilierende Mikroorganismen im Boden vorkommen. Während man in der Vergangenheit die Reduktion derartiger Bodenlebewesen für wenig relevant hielt, so weiß man heute, dass die genannten Organismen zentral für die Qualität der Böden sind. Insbesondere Böden, die stark wechselnden Witterungen, wie beispielsweise hohen Temperaturen oder Starkregen, ausgesetzt sind, benötigen eine gesunde Biomasse, wie z. B. Insekten, Nematoden oder Anneliden, um auch bei stark schwankenden Wetterbedingungen hohe Erträge bei Pflanzen sicherzustellen.

Daher liegt der Erfindung die Aufgabe zugrunde, neue und verbesserte Granulate bereitzustellen, die die Pedosphäre in Bezug auf Bodenflora und Bodenfauna optimieren. Zur Bodenflora gehören überwiegend pflanzliche bzw. nicht tierische Organismen, wie z.B. Bakterien, Strahlenpilze, Pilze, Algen und Flechten. Die Bodenfauna setzt sich aus tierischen Einzellern und vielzelligen Organismen zusammen, die nach ihrer Größe differenziert werden in Mikrofauna (< 0,2 mm; z.B. Wimperntiere, Geißeltiere, Amöben, kleine Fadenwürmer), Mesofauna (< 2 mm; z.B. Springschwänze, Rädertiere, Milben), Makrofauna (> 2 mm; z.B. Borstenwürmer, Asseln, Insekten) und Megafauna (> 20 mm; z.B. Wirbeltiere wie Wühlmäuse, Spitzmäuse, Maulwurf). Die Optimierung betrifft vor allem zum einen das verbesserte Pflanzenwachstum, als auch das Wachstum der Bakterien, Geißeltierchen, Fadenwürmern, Anneliden oder Insekten und andere.

Der vorliegenden Erfindung liegt auch die Aufgabe zu Grunde, ein wirtschaftliches, ökologisches, flexibles, einfaches und technisch umsetzbares Verfahren zur Herstellung von boden- und/oder pflanzenspezifischen Düngemitteln mit exakt einstellbarer Nährstoffzusammensetzung in Granulatform bereitzustellen. Durch das erfindungsgemäße Verfahren sollen verschiedenste anorganische Sekundärphosphate effizient und kostengünstig aufbereitet werden können, wobei auch gezielt boden- und pflanzenspezifische Düngerzusammensetzungen bereitgestellt werden sollen, wobei im daraus resultierendem Düngergranulat ein Großteil des Phosphates in einer gut pflanzenverfügbaren Form vorliegen soll und zumindest ein Teil der Schwermetallen abgetrennt ist. Außerdem soll ein Düngemittel bereitgestellt werden, dass in der Landwirtschaft, in der Forstwirtschaft oder im Gartenbau als Pedoshärenverbesserer eingesetzt und/oder verwendet werden kann.

### Beschreibung der Erfindung:

Gelöst wird die Aufgabe durch die Merkmale der unabhängigen Ansprüche. Vorteilhafte Ausgestaltungen der Erfindung sind in den abhängigen Ansprüchen beschrieben.

Erfindungsgemäß ist ein pedoshärenverbesserndes Granulat vorgesehen, dass mit einem Verfahren hergestellt wird, das die folgenden Schritte umfasst:
a) Erzeugung einer Rohstoffdispersion umfassend mindestens ein anorganisches Sekundärphosphat und mindestens ein Reaktionsmittel, wobei der Anteil an einer flüssigen Phase in der Rohstoffdispersion größer 30 % ist, bei einer Inkubationszeit zwischen anorganischem Sekundärphosphat und Reaktionsmittel zwischen 1 bis 100 Minuten,
b) Abtrennung eines Teils der flüssigen Phase der Rohstoffdispersion,
c) Granulierung und/oder Extrudierung der verbleibenden Rohstoffdispersion mit reduzierter flüssiger Phase,
d) entweder Rückführung der im Prozessschritt b) abgetrennten flüssigen Phase ohne zumindest teilweise Schwermetallabtrennung in den Prozessschritt a) zur Herstellung einer Rohstoffdispersion
   oder zumindest teilweises Absondern von Schwermetallen aus der im Prozessschritt b) abgetrennten flüssigen Phase sowie Ausschleusung dieser Schwermetalle aus dem Prozess mit anschließender Rückführung der schwermetallarmen abgetrennten flüssige Phase zur Herstellung einer Rohstoffdispersion analog Prozessschritt a) und/oder in den Prozessschritt c) und
e) Wiederholen der Prozessschritte a) bis d),
   wobei das mindestens eine Reaktionsmittel ausgewählt ist aus organischen Säuren, anorganischen Säuren, Säuregemischen, Laugen oder Gemischen aus unterschiedlichen Laugen, jeweils in unverdünnter oder verdünnter Form,
   wobei der P2O5-Anteil des pedosphärenverbessernden Granulates (6) eine Neutralammoniumcitratlöslichkeit von größer als 60 Gew.-% und eine Wasserlöslichkeit von kleiner als 40 Gew.-%, bezogen auf den Gesamtphosphatgehalt des Granulates, aufweist, und
   wobei die Neutralammoniumcitratlöslichkeit des P2O5-Anteils des pedosphärenverbessernden Granulates (6) durch die Reaktion mit dem Reaktionsmittel um mindestens 20 % höher gegenüber dem mindestens einen anorganischen Sekundärphosphat (1) ist.

In einem weiteren Aspekt betrifft die Erfindung ein Verfahren zur Herstellung eines pedoshärenverbessernden Granulats, das die genannten Verfahrensschritte a) bis e) umfasst.

Das erfindungsgemäße Verfahren zur Herstellung eines pedosphärenverbessernden Granulats (6) umfasst die folgenden Schritte:
a) Erzeugung einer Rohstoffdispersion umfassend mindestens ein anorganisches Sekundärphosphat (1) und mindestens ein Reaktionsmittel (2), wobei der Anteil an einer flüssigen Phase (4) in der Rohstoffdispersion größer 30 Gew.-% ist, bei einer Inkubationszeit zwischen anorganischem Sekundärphosphat (1) und Reaktionsmittel (2) zwischen 1 bis 100 Minuten, wobei das Reaktionsmittel zumindest einen Teil des durch das anorganische Sekundärphosphat zugeführten Phosphates löst und/oder mit diesen reagiert,
b) Abtrennung eines Teils der flüssigen Phase (4) der Rohstoffdispersion,
c) Granulierung und/oder Extrudierung der verbleibenden Rohstoffdispersion mit reduzierter flüssiger Phase (4),
d) entweder Rückführung der im Prozessschritt b) abgetrennten flüssigen Phase (4) ohne zumindest teilweise Schwermetallabtrennung (5) in den Prozessschritt a) zur Herstellung einer Rohstoffdispersion
   oder zumindest teilweises Absondern von Schwermetallen (7) aus der im Prozessschritt b) abgetrennten flüssigen Phase (4) sowie Ausschleusung dieser Schwermetalle (7) aus dem Prozess mit anschließender Rückführung der schwermetallarmen abgetrennten flüssige Phase (4) zur Herstellung einer Rohstoffdispersion analog Prozessschritt a) und/oder in den Prozessschritt c) und
e) Wiederholen der Prozessschritte a) bis d),

wobei das mindestens eine Reaktionsmittel ausgewählt ist aus organischen Säuren, anorganischen Säuren, Säuregemischen, Laugen oder Gemischen aus unterschiedlichen Laugen, jeweils in unverdünnter oder verdünnter Form,
wobei der P₂O₅-Anteil des erhaltenen pedosphärenverbessernden Granulates (6) eine Neutralammoniumcitratlöslichkeit von größer als 60 Gew.-% und eine Wasserlöslichkeit von kleiner als 40 Gew.-%, bezogen auf den Gesamtphosphatgehalt des Granulates, aufweist.

Alle Prozentangaben (%) im Kontext der Erfindung beziehen sich auf Gewichtsprozent (Gew.-% d. h. % w/w), wenn nicht anders angegeben. Ein besonderer Vorteil des vorgeschlagenen Granulats und des vorgeschlagenen Verfahrens besteht darin, dass die Neutralammoniumcitratlöslichkeit des mit dem anorganischen Sekundärphosphat zugeführten Phosphats durch Reaktion mit dem mindestens einem Reaktionsmittel erhöht wird und der P2O5-Anteil aus dem anorganischen Sekundärphosphat im Düngergranulat größer 60 % neutral-ammoniumcitratlöslich ist. Der Begriff "P2O5-Anteil" beschreibt im Sinne der Erfindung bevorzugt den Anteil an P₂O₅ im Düngergranulat.

Die Erfindung betrifft ein pedoshärenverbesserndes Granulat, das mit einem Verfahren umfassend die folgenden Schritte herstellbar ist:
a) Erzeugung einer Rohstoffdispersion aus mindestens einem anorganischen Sekundärphosphat und mindestens einem Reaktionsmittel, wobei der Anteil an flüssiger Phase in der Rohstoffdispersion größer 30 % ist, sowie Inkubationszeit zwischen anorganischem Sekundärphosphat und Reaktionsmittel zwischen 1 bis 100 Minuten,
b) Abtrennung eines Teils der flüssigen Phase der unter a) hergestellt Rohstoffdispersion,
c) Granulierung und/oder Extrudierung der verbleibenden Rohstoffdispersion mit reduzierter flüssiger Phase aus Prozessschritt b),
d) entweder Rückführung der im Prozessschritt b) abgetrennten flüssigen Phase ohne zumindest teilweise Schwermetallabtrennung in den Prozessschritt a) zur Herstellung einer Rohstoffdispersion oder zumindest teilweises Absondern von Schwermetallen aus der im Prozessschritt b) abgetrennten flüssigen Phase sowie Ausschleusung dieser Schwermetalle aus dem Prozess mit anschließender Rückführung der schwermetallarmen abgetrennten flüssige Phase zur Herstellung einer Rohstoffdispersion analog Prozessschritt a) und/oder in den Prozessschritt c) und
e) wiederholen der Prozessschritte a) bis d),
wobei die Neutralammoniumcitratlöslichkeit des mit dem anorganischen Sekundärphosphat zugeführten Phosphats durch Reaktion mit dem mindestens einem Reaktionsmittel erhöht wird und der P2O5-Anteil aus dem anorganischen Sekundärphosphat im Düngergranulat größer 60 % neutral-ammoniumcitratlöslich und kleiner als 40% wasserlöslich ist.

Granulate, die zur Verbesserung einzelner Bodenschichten eingesetzt werden, sind mithilfe von chemischen Formeln oder biophysikalischen Daten nur schwer zu charakterisieren. Deshalb werden die pedosphärenverbessernden Granulate im Sinne der Erfindung bevorzugt durch ein Verfahren zu ihrer Herstellung charakterisiert. Dies ist deshalb zulässig, da die pedosphärenverbessernden Granulate nur schwer anders als anhand des Herstellungsverfahrens zu definieren sind. Die vorgeschlagenen Granulate umfassen vorzugsweise mehrere Nährstoffquellen. Eine dieser Nährstoffquellen stellt erfindungsgemäß anorganisches Sekundärphosphat dar, wie es beispielsweise in Klärschlammaschen vorkommt. Dieses Sekundärphosphat wird durch Einwirken eines Reaktionsmittels verfügbar gemacht. Die im anorganischen Sekundärphosphat enthaltenen Schwermetalle können zumindest teilweise abgetrennt werden, wobei außer den abgetrennten und ausgeschleusten Schwermetallen keine weiteren Reststoffe anfallen. Durch das vorgeschlagene Verfahren und die vorgeschlagene Vorrichtung können verschiedenste anorganische Sekundärphosphate effizient und kostengünstig aufbereitet werden, wobei die typische Schwankungsbreite der Sekundärrohstoffe durch flexibel einsetzbare weitere Nährstoffkomponenten ausgeglichen werden kann. Dadurch wird es ermöglicht, dass gezielt boden- und/oder pflanzenspezifische Düngerzusammensetzungen bereitgestellt werden können, wobei im daraus resultierendem Düngergranulat ein Großteil des Phosphates in einer gut pflanzenverfügbaren Form vorliegen und zumindest ein Teil der Schwermetalle abgetrennt werden können.

Ein weiterer Vorteil der Erfindung besteht darin, dass als Nährstoffquelle anorganisches Sekundärphosphat, wie beispielsweise Klärschlammaschen, eingesetzt und so einer sinnvollen Verwendung zugeführt werden können, wobei das darin enthaltene Phosphat besonders pflanzenverfügbar gemacht wird. Darüber hinaus ermöglicht es die Erfindung, die im anorganischen Sekundärphosphat enthaltenen Schwermetalle zumindest teilweise abzutrennen. Tests haben gezeigt, dass überraschenderweise neben den abgetrennten und ausgeschleusten Schwermetallen keine weiteren Reststoffe aus dem Verfahren resultieren.

Es ist im Sinne der Erfindung bevorzugt, dass die Rohstoffdispersion vor der teilweisen Abtrennung der flüssigen Phase so eingestellt wird, dass der Feststoffanteil weniger 50 % beträgt. Mit anderen Worten ist es im Sinne der Erfindung bevorzugt, dass bei dem vorgeschlagenen Verfahren der Feststoffanteil innerhalb der Rohstoffdispersion weniger als 50 % beträgt. Es ist im Sinne der Erfindung darüber hinaus bevorzugt, dass ein pH-Wert der erzeugten Rohstoffdispersion vor der teilweisen Abtrennung der flüssigen Phase in einem Bereich zwischen 1,5 bis 3,5 liegt. Ferner kann das zumindest teilweise Absondern von Schwermetallen aus der im Prozessschritt b) abgetrennten flüssigen Phase durch eine oder mehrere Fällungsreaktionen und anschließender Abtrennung der Fällungsprodukte erfolgen. Mit anderen Worten es ist im Sinne der Erfindung bevorzugt, dass der pH-Wert der erzeugten Rohstoffdispersion vor der teilweisen Abtrennung der flüssigen Phase im Prozessschritt b) im Bereich 1,5 bis 3,5 liegt oder eingestellt wird und das zumindest teilweises Absondern von Schwermetallen aus der im Prozessschritt b) abgetrennten flüssigen Phase durch eine oder mehrere Fällungsreaktionen und anschließender Abtrennung der Fällungsprodukte erfolgen kann.

Vorzugsweise ist der pH-Wert der erzeugten Rohstoffdispersion vor und während der teilweisen Abtrennung der flüssigen Phase kleiner als 2. Es ist darüber hinaus bevorzugt, dass zumindest teilweises Absondern von Schwermetallen aus der im Prozessschritt b) abgetrennten flüssigen Phase durch ein oder mehrere selektive Abtrennungsverfahren erfolgt. Es ist somit im Sinne der Erfindung insbesondere bevorzugt, dass der pH-Wert der erzeugten Rohstoffdispersion vor und während der teilweisen Abtrennung der flüssigen Phase im Prozessschritt b) kleiner als 2 ist und das zumindest teilweises Absondern von Schwermetallen aus der im Prozessschritt b) abgetrennten flüssigen Phase durch ein oder mehrere selektive Abtrennungsverfahren erfolgen kann.

In einer bevorzugten Ausführungsform der Erfindung weist die Rohstoffdispersion mit reduzierter flüssiger Phase aus Prozessschritt b) einen Feuchtegehalt zwischen 10 und 40 % auf. Es ist im Sinne der Erfindung darüber hinaus bevorzugt, dass der pH-Wert der Rohstoffdispersion mit reduzierter flüssiger Phase in einem Bereich von 4-8 liegt. Es ist im Sinne der Erfindung insbesondere bevorzugt, dass die Rohstoffdispersion mit reduzierter flüssiger Phase aus Prozessschritt b) einen Feuchtegehalt von 10 bis weniger 40 % enthält, wobei der pH-Wert diese Rohstoffdispersion mit reduzierter flüssiger Phase im Bereich von 4-8 eingestellt werden kann.

Das vorgeschlagene Verfahren und das vorgeschlagene pedosphärenverbessernde Granulat können darüber hinaus durch die weiteren Merkmale gekennzeichnet sein, nämlich insbesondere dadurch,
- dass die in Prozessschritt b) abgetrennte flüssige Phase einer zumindest teilweisen Schwermetallabtrennung zugeführt wird,
- dass die zumindest teilweise von den Schwermetallen gereinigte abgetrennte flüssige Phase anschließend in den Prozessschritt a) zur Herstellung einer Rohstoffsuspension zugeführt wird, wobei das Reaktionsmittel vor und/oder bei der Rückführung in den Prozessschritt a) zumindest teilweise dieser flüssigen Phase zugeführt werden kann,
- dass die Rohstoffdispersion mit reduzierter flüssiger Phase nach Prozessschritt b) einen Feststoffgehalt von 40 % bis 70 % aufweist und/oder
- dass die Rohstoffdispersion mit reduzierter flüssiger Phase einer Granulierung zugeführt wird.

Es kann darüber hinaus bevorzugt sein, dass die Granulierung in einem Wirbelschicht- oder Strahlschichtreaktor erfolgt und/oder dass die Granulierung durch Sprühgranulation und/oder Sprühagglomeration erfolgt.

In einer bevorzugten Ausführungsform der Erfindung schließt sich nach der Granulierung eine Fraktionierung des erzeugten Nährstoffgranulates an, wobei eine Grobfraktion und/oder eine Feinfraktion aufgemahlen und dem Schritt a), b) und/oder c) zumindest teilweise zuführbar ist. Es ist mit anderen Worten im Sinne der Erfindung bevorzugt, dass sich nach der Granulierung eine Fraktionierung des erzeugten Nährstoffgranulates anschließt, wobei die Grobfraktion und/oder die Feinfraktion aufgemahlen und dem Schritt a) und/oder b) und/oder c) zumindest teilweise zugeführt werden kann.

Es ist im Sinne der Erfindung bevorzugt, dass in Summe 1 bis 70 % Kristallisationsprodukte aus einer Phosphorelimination dem Schritt a), b) und/oder c) zuführbar sind, wobei eine Trocknung oberhalb 100°C bezogen auf die Materialtemperatur bei der Trocknung erfolgt. Mit anderen Worten kann der Anteil von Kristallisationsprodukten aus einer Phosphorelimination, der dem Schritt a), b) und/oder c) zugeführt werden kann, in Summe vorzugsweise in einem Bereich zwischen 1 und 70 % liegen, wobei eine Trocknung oberhalb 100°C bezogen auf die Materialtemperatur bei der Trocknung erfolgen kann. Es ist im Sinne der Erfindung bevorzugt, dass die Produkte aus der P-Elimination Rohstoffe sind, die der Rezeptur zugeführt werden.

Ebenfalls offenbart ist eine Vorrichtung zur Herstellung von Granulaten, die mindestens die folgenden Komponenten umfasst:
- einen ersten Mischbehälter zur Zuführung und/oder Mischung zumindest des anorganischen Sekundärphosphats und des Reaktionsmittels, wodurch eine Rohstoffdispersion erhalten wird, wobei für die Inkubationszeit entweder der erste Mischbehälter genutzt wird und/oder weitere Behälter vorhanden sind, in die die Rohstoffdispersion für die Inkubationszeit überführt und gemischt wird,
- eine Abtrenneinheit zur Abtrennung zumindest eines Teils der flüssigen Phase, wobei die Abtrenneinheit in dem ersten Mischbehälter integriert oder davon separat ist,
- eine Granulier- und/oder Extrudiereinheit zum Granulieren und/oder Extrudieren der verbleibenden Rohstoffdispersion mit reduzierter flüssiger Phase aus Prozessschritt b), wobei in dieser Granulier- und/oder Extrudiereinheit weitere Komponenten zuführbar sind und/oder die Rohstoffdispersion mischbar sind, wobei mindestens eine Zuführungseinheit von der Abtrenneinheit zum Überführen der Rohstoffdispersion in die Granulier- und/oder Extrudiereinheit vorhanden ist,
- eine Rückführeinheit für die abgetrennte flüssige Phase ohne Schwermetallabscheidung oder nach der teilweisen Absonderung der Schwermetalle zum Mischbehälter zur Herstellung einer Rohstoffdispersion analog Prozessschritt a) und/oder zur Granulier- und/oder Extrudiereinheit.

Es ist bevorzugt, dass die Vorrichtung zur Herstellung von Granulaten jeweils mindestens eine der genannten Komponenten umfasst. Es kann jedoch für unterschiedliche Anwendungen auch bevorzugt sein, dass die Vorrichtung von den unterschiedlichen Komponenten mehr als ein Stück umfasst, beispielsweise zwei Mischbehälter, drei Granulier- und/oder Extrudiereinheiten oder zwei Rückführeinheiten, ohne darauf beschränkt zu sein.

Optional kann die Vorrichtung zur Herstellung der Granulate eine Einheit zur Absonderung der Schwermetalle umfassen, wobei in diese Einheit zumindest ein Teil der

Schwermetalle aus der im Prozessschritt b) abgetrennten flüssigen Phase abtrennbar und aus dem Prozess ausschleusbar sind, wobei mindestens eine Zuführungseinheit von der Abtrenneinheit zum Überführen der teilweise abgetrennten flüssigen Phase in diese Einheit zum Absondern der Schwermetalle vorhanden ist. Es ist mit anderen Worten im Sinne der Erfindung bevorzugt, dass in die Absonder-Einheit zumindest ein Teil der Schwermetalle aus der im Prozessschritt b) abgetrennten flüssigen Phase abgetrennt und aus dem Prozess ausgeschleust werden kann.

Es ist bevorzugt, dass im Fall einer separaten Abtrenneinheit mindestens eine Zuführungseinheit von dem ersten Mischbehälter zum Überführen der Rohstoffdispersion in die Abtrenneinheit vorhanden ist und dort weitere Misch- und Zuführungseinheiten zum Mischen und zur Zugabe von weiteren Komponenten integriert sein können.

Insbesondere kann die Vorrichtung zur Herstellung von Granulaten aus folgenden Bestandteilen bestehen:
- mindestens einem Mischbehälter, in dem oder in denen zumindest das anorganische Sekundärphosphat und das Reaktionsmittel zugeführt und gemischt wird, wobei für die Inkubationszeit entweder dieser Mischbehälter genutzt wird und/oder dafür weitere Behälter vorhanden sind, in die die Rohstoffdispersion für die Inkubationszeit überführt wird und gemischt werden kann,
- mindestens einer Abtrenneinheit, in der zumindest ein Teil der flüssigen Phase abgetrennt werden kann, wobei die Abtrenneinheit in dem Mischbehälter integrierten oder davon separate sein kann, wobei im Fall einer separaten Abtrenneinheit mindestens eine Zuführungseinheit von dem Mischbehälter zum Überführen der Rohstoffdispersion in die Abtrenneinheit vorhanden ist und dort weitere Misch- und Zuführungseinheiten zum Mischen und zur Zugabe von weiteren Komponenten integriert sein können,
- mindestens einer Granulier- und/oder Extrudiereinheit, in der zumindest die verbleibenden Rohstoffdispersion mit reduzierter flüssiger Phase aus Prozessschritt b) granuliert und/oder extrudiert werden kann, wobei in dieser Granulier- und/oder Extrudiereinheit weitere Komponenten zugeführt und/oder die Rohstoffdispersion gemischt werden kann, wobei mindestens eine Zuführungseinheit von der Abtrenneinheit zum Überführen der Rohstoffdispersion in die Granulier- und/oder Extrudiereinheit vorhanden ist, wobei weitere Misch- und Zuführungseinheiten zum Mischen und zur Zugabe von weiteren Komponenten in der Zuführungseinheit vorhanden sein können, wobei sich an die Granulier- und/oder Extrudiereinheit eine Trocknungseinheit zur Trocknung der erzeugten Granulate und/oder Extrudate anschließen kann,
- mindestens einer Einheit zur Absonderung der Schwermetalle, in der zumindest ein Teil der Schwermetalle aus der im Prozessschritt b) abgetrennten flüssigen Phase abgetrennt und aus dem Prozess ausgeschleust werden können, wobei mindestens eine Zuführungseinheit von der Abtrenneinheit zum Überführen der teilweise abgetrennten flüssigen Phase in diese Einheit zum Absondern der Schwermetalle vorhanden ist und
- mindestens einer Rückführeinheit für die abgetrennte flüssige Phase ohne Schwermetallabscheidung oder nach der teilweisen Absonderung der Schwermetalle zum Mischbehälter zur Herstellung einer Rohstoffdispersion analog Prozessschritt a) und/oder zur Granulier- und/oder Extrudiereinheit.

Es ist bevorzugt, dass die Granulier- und/oder Extrudiereinheit ein Intensivmischer, ein Granulierteller oder ein Wirbelschicht- oder Strahlschichtreaktor ist oder einen solchen umfasst.

Es ist im Sinne der Erfindung bevorzugt, dass das Düngergranulat in Summe 0,1 bis 25 % Huminsäure, Fulvosäure, deren Salze (Humate, Fulvate) und/oder in Summe 0,1 bis 30 % organische Säure und/oder in Summe 0,1 bis 50 % Strukturstoffe aufweist. Es ist im Sinne der Erfindung insbesondere bevorzugt, dass das beschichtete oder das unbeschichtete Düngergranulat in Summe 0,1 bis 25 % Huminsäure, Fulvosäure, deren Salze (Humate, Fulvate) und/oder in Summe 0,1 bis 30 % organische Säure und/oder in Summe 0,1 bis 50 % Strukturstoffe enthält.

In einer bevorzugten Ausführungsform der Erfindung weist das Düngergranulat ein oder mehrere Kristallisationsprodukte aus der Phosphorelimination in einen Konzentrationsbereich zwischen 1 bis 70 % auf. Es ist mit anderen Worten bevorzugt, dass das eine oder die mehreren Kristallisationsprodukte eine Konzentration zwischen 1 und 70 % aufweisen, wobei die Kristallisationsprodukte aus der Phosphorelimination stammen und im erfindungsgemäßen Verfahren als Nährstoffkomponente zugegeben werden.

In einem weiteren Aspekt betrifft die Erfindung eine Verwendung des erfindungsgemässen Düngergranulats zur Nährstoffzufuhr in der Land-, Forstwirtschaft und/oder im Gartenbau, wobei das Düngergranulat mindestens ein anorganisches Sekundärphosphat umfasst, sowie einen größer 60 % neutral-ammoniumcitratlöslichen P2O5-Anteil. Vorzugsweise liegt das Granulat bzw. seine Bestandteile beschichtet oder unbeschichtet vor. Es ist im Sinne ganz besonders bevorzugt, dass das vorgeschlagene Düngergranulat in der Land-, Forstwirtschaft und/oder im Gartenbau verwendet werden kann.

Es war völlig überraschend, dass die vorgeschlagenen pedosphärenverbessernde Granulate sowohl die Phosphorversorgung von Pflanzen sicherstellen, als auch die Entwicklung von Kleinstlebewesen wie auch von Bakterien und Protozoen so optimieren, dass die Pflanzen erheblich besser wachsen. Es lag für den Fachmann keinesfalls nahe, dass pedosphärenverbessernde Granulate, die durch die genannten Schritte der Herstellung charakterisiert werden, geeignet sind, sowohl die tierische Lebendmasse der Böden zu optimieren, als auch das Pflanzenwachstum zu verbessern. Dies betrifft vor allem Mais, Weizen, Zwiebeln, Kartoffeln, Hirse, Bohnen, Äpfel, Zuckerrüben, Gurken und Gewürzgurken, Weintrauben, Tomaten, Gerste und Kohlpflanzen.

Die Gesamtmenge an Phosphor (P) sowie die Schwermetalle wie beispielsweise Blei, Cadmium, Nickel werden mittels induktiv-gekoppelter Plasma-Atom-Emissionsspektrometrie (ICP-OES) gemäß DIN EN ISO 11885:2009 bestimmt. Dazu wird die zu bestimmende Probe zunächst mit einem Königswasseraufschluss gemäß DIN EN 13346:2001-04 aufgeschlossen. Zur Bestimmung des löslichen Phosphatanteils sind unterschiedliche Verfahren, insbesondere unterschiedliche Extraktionsverfahren bekannt. Zur Abschätzung der P-Verfügbarkeit werden dazu die Düngemittel im Labor mit unterschiedlichen Lösungsmitteln untersucht und entsprechend gekennzeichnet. Die wichtigsten eingesetzten Lösungsmittel sind Wasser, Ammoncitrat, Zitronensäure, Ameisensäure und Mineralsäuren. Auch in der EU-Verordnung über Düngemittel sind verschiedene Verfahren zur Bestimmung der Phosphatlöslichkeit von Düngemitteln normiert. Je nach Herkunft und Beschaffenheit des zu prüfenden P-Düngers kann ein unterschiedliches Verfahren zum Einsatz kommen. Zur Charakterisierung der Löslichkeit des Phosphates werden im Kontext der vorliegenden Erfindung die drei folgenden Extraktionsverfahren angewendet: Die Extraktion des in Wasser löslichen Phosphors (P) erfolgt gemäß DIN EN15958:2011. Die Extraktion des in neutralem Ammoniumcitrat löslichen Phosphors (P) erfolgt gemäß DIN EN15957:2011. Die Extraktion des 2%iger Citronensäure löslichen Phosphors (P) erfolgt gemäß DIN EN15920:2011. Der Phosphatgehalt (P) wird anschließend mittels induktiv-gekoppelter Plasma-Atom-Emissionsspektrometrie (ICP-OES) gemäß DIN EN ISO 11885:2009 bestimmt.

Insbesondere bei hohen Anteilen von wasser- und ammoncitratlöslichem Phosphat ist gewährleistet, dass ein großer Teil des Düngerphosphats tatsächlich kurz- und mittelfristig der Pflanze zur Verfügung steht. Der neutral-ammoncitratlösliche Phosphoranteil kann dabei als Anhaltspunkt für die mittelfristige Pflanzenverfügbarkeit des Düngephosphors herangezogen werden, d. h. über den Zeitraum von etwa einer Fruchtfolge. Der unmittelbar verfügbare P-Anteil eines Düngemittels wird durch seine Löslichkeit in Wasser beschrieben. Je höher der wasserlösliche P-Anteil, desto schneller bzw. leichter die Verfügbarkeit des Dünge-Phosphors für die Pflanze. Mit stärkeren Lösungsmitteln, wie Zitronen- oder Ameisensäure, werden auch P-Anteile gelöst, die allenfalls langfristig oder nur unter bestimmten Standortbedingungen, wie tiefen pH-Werten, pflanzenverfügbar sind. Pflanz- und Vegetationsversuche haben gezeigt, dass vor allem eine gute Korrelation zwischen neutral-ammoncitratlöslichem Phosphatanteil und dem Wachstum der Pflanzen besteht. Hohe Wasserlöslichkeit stellt Phosphat sehr schnell in großen Mengen zur Verfügung, was die Pflanze unter Umständen im Wachstum gar nicht in gleicher zeitlicher Abfolge vollständig aufnehmen kann, dann also ungenutzt bleibt und gegebenenfalls ausgewaschen wird. Nach heute übereinstimmender wissenschaftlicher Meinung sollte aus Gründen des Ressourcenschutzes die Verwendung von P-Düngemitteln bevorzugt werden, die einen besonders hohen neutral-ammoncitratlöslichen Phosphatanteil aufweisen. Insofern erfüllt die vorliegende Erfindung die Forderung nach hohen neutral-ammoncitratlöslichen Phosphatanteilen, indem mit dem vorgeschlagenen Verfahrens Düngergranulate mit einem besonders hohen neutral-ammoniumcitratlöslichen P2O5-Anteil von größer 60 %, bevorzugt größer 70 %, besonders bevorzugt größer 80 % am gesamten P2O5-Anteil im Düngergranulat bereitgestellt werden.

Düngemittel sind im Sinne der Erfindung Stoffe oder Stoffgemische, die das Nährstoffangebot für die angebauten Pflanzen, insbesondere Kulturpflanzen, in der Land- und Forstwirtschaft sowie im Gartenbau ergänzen beziehungsweise einstellen und sie können gegebenenfalls mit weiteren Materialien kombiniert und/oder funktionalisiert werden. Als Düngemittel werden hier sowohl Einzelnährstoffdünger, wie Phosphatdünger, als auch Mehrnährstoffdünger verstanden. Düngemittel in Granulatform, d.h. Düngergranulat, ist ein Haufwerk typischerweise in annähernd sphärischer Form und ausreichender Eigenfestigkeit mit einer mittleren Granulatgröße von 0,5- 10 mm, bevorzugt 1-7 mm, ganz besonders bevorzugt 2-5 mm.

Als anorganisches Sekundärphosphat werden im Sinne der Erfindung solche Stoffe bezeichnet, die bei der Aufbereitung, Zubereitung oder Herstellung von etwas entstehen (Überrest) und einen Phosphoranteil größer als 5 % P2O5 und einen TOC-Anteil (TOC = *total organic carbon*) von kleiner als 3 % aufweisen. Beispiele für anorganische Sekundärphosphate sind Aschen und/oder Schlacken aus der Mono- oder Mitverbrennung von Klärschlamm, Aschen und/oder Schlacken aus der Verbrennung bzw. Mitverbrennung von Tierausscheidungen, Tiermehl, Tierreste und Tierkörper oder Aschen/Schlacken aus der Verbrennung von Gülle und Gärresten als Einzelstoff bzw. Gemische daraus. Die im anorganischen Sekundärphosphat enthaltenen Phosphorverbindungen werden hier als Phosphat bezeichnet, auch wenn dies in ihrer Gesamtheit in Einzelfällen nicht oder nicht vollständig der Bindungsart des Phosphors entsprechen sollte.

Unter einem Reaktionsmittel ist im Kontext der vorliegenden Erfindung ein Stoff oder ein Gemisch zu verstehen, der/das zum einen zumindest einen Teil des durch das anorganische Sekundärphosphat zugeführten Phosphates löst und/oder mit diesen reagiert und zum anderen zumindest einen Teil der Schwermetalle aus dem anorganischen Sekundärphosphat löst. Reaktionsmittel sind organische oder anorganische Säuren oder Säuregemische oder Laugen oder Gemische aus unterschiedlichen Laugen, jeweils in unverdünnter oder verdünnter Form.

Als flüssige Phase wird im Kontext der vorliegenden Erfindung die Summe der flüssigen Stoffe in einem zusammenhängenden System definiert. So besteht die Rohstoffdispersion aus einer festen und einer flüssigen Phase. Die feste Phase ist im Kontext der vorliegenden Erfindung die Summe der ungelösten Stoffe. Die flüssige Phase in einem System, zum Beispiel in einer Rohstoffdispersion, kann dabei aus unterschiedlichen flüssigen Komponenten gebildet werden. So können flüssige Komponenten beispielsweise zumindest anteilig in Form von Feuchte, anteilig in einer Suspension oder als Flüssigkeit über verschiedene Stoffe bzw. zum Beispiel als Wasser zugeführt werden oder zumindest anteilig im Reaktionsmittels, beispielsweise flüssige insbesondere auch verdünnte Säuren, enthalten sein. Der Begriff "Feuchte" entspricht im Sinne der Erfindung dem physikalisch gebundenen Wasser, welches am Stoff oder Stoffgemisch anhaftet. Der Begriff "Feuchte" wird auch synonym verwendet mit dem Begriff "Feuchtegehalt".

Die Feuchte beziehungsweise der Feuchtegehalt wird im Kontext der vorliegenden Erfindung gravimetrischen nach DIN 52183 bestimmt. Bei der auch als Darr-Methode bekannten gravimetrischen Feuchtigkeitsbestimmung wird die Probe zuerst gewogen und anschließend bei 105°C in einem Trockenofen bis zur Gewichtskonstanz getrocknet. Dabei entweicht das in der Probe enthaltene freie Wasser. Die Gewichtsdifferenz wird festgestellt, welche im Kontext der vorliegenden Erfindung der Feuchte bzw. dem Feuchtegehalt entspricht. Da die flüssige Phase auch gelöst vorliegende Komponenten beinhalten kann, die bei der Trocknung als Feststoff verbleiben, ist in der Regel der prozentuale Anteil der flüssigen Phase zum Teil deutlich höher als die Feuchte.

Im Prozessschritt a) des vorgeschlagenen Verfahrens wird eine Rohstoffdispersion aus mindestens einem anorganischen Sekundärphosphat und mindestens einem Reaktionsmittel erzeugt, wobei der Anteil an flüssiger Phase größer als 30 % ist und die Inkubationszeit zwischen anorganischem Sekundärphosphat und Reaktionsmittel zwischen 1 bis 100 Minuten liegt.

Die Rohstoffdispersion, die im Kontext des vorgeschlagenen Verfahrens verwendet wird, weist einen deutlich höheren Anteil an flüssiger Phase auf als im Vergleich zu konventionellen Verfahren, die aus dem Stand der Technik bekannt sind. Es ist im Stand der Technik bekannt, dass die Phosphataschen mit Mineralsäure direkt und erdfeucht vermischt und gleichzeitig granuliert werden. Die im Kontext der vorgeschlagenen Erfindung vorgesehene Herstellung einer Rohstoffdispersion hat dadurch erhebliche technische Vorteile. So werden die beim Mischen der phosphathaltigen Sekundärrohstoffe mit der Mineralsäure häufig spontan ablaufenden und zum Teil sehr exothermen Reaktionen kontrollier- und steuerbar. Der erfindungsgemäße höhere Anteil an flüssiger Phase wirkt vorteilhafterweise als Reaktionspuffer. Auch ist eine Rohstoffdispersion mit deutlich höherem Anteil an flüssiger Phase wesentlich weniger klebrig. Eine stabile Prozessführung wird damit wesentlich erleichtert und Anhaftung und Verstopfung von Anlagenteilen können dadurch effektiv reduziert werden. Aus diesem Grund enthält die erzeugte Rohstoffdispersion einen Anteil an flüssiger Phase von bevorzugt größer als 50 %, besonders bevorzugt größer als 70 %.

In einer bevorzugten Ausführungsform der Erfindung enthält die Rohstoffdispersion nach der erfindungsgemäß vorgesehenen Inkubationszeit vorzugsweise eine ungelöste feste Phase von weniger als 40 %. In diesem Bereich ist eine besonders gute und einfache Homogenisierung der erzeugten Rohstoffdispersion möglich. In einer besonders bevorzugten Ausführungsform der Erfindung enthält die Rohstoffdispersion nach der erfindungsgemäß vorgesehenen Inkubationszeit eine ungelöste feste Phase von weniger als 30 %. Bei solch Verhältnissen ist die Lösegeschwindigkeit verhältnismäßig hoch, wodurch die notwendige Reaktionszeit vorteilhafterweise verkürzt werden kann.

In einer weiteren besonders bevorzugten Ausführungsform der Erfindung enthält die Rohstoffdispersion nach der erfindungsgemäß vorgesehenen Inkubationszeit einen Anteil an fester Phase von weniger als 15%. Bei diesem niedrigen ungelösten Anteil und respektive hohen Flüssigphasenanteil stellen sich verhältnismäßig niedrige Konzentrationen der gelöste Schwermetalle in der flüssigen Phase ein, weil der gelöste Anteil an Schwermetallen durch den hohen Anteil an flüssigen Phase verdünnt wird. Durch die teilweise Abtrennung der flüssigen Phase im Schritt b) resultiert dann ein niedrigerer Schwermetallgehalt in der beim Feststoff verbleibenden, nicht abgetrennten flüssigen Phase. So resultiert eine gewünschte höhere Schwermetallabtrennung im Schritt b) bei gleicher Abtrennintensität.

Auch können durch die Herstellung der Rohstoffdispersion im Prozessschritt a) vorteilhafterweise die Korrosionsprobleme gelöst werden. Die Reaktion zwischen anorganischem Sekundärphosphat und Reaktionsmittel kann vorzugsweise in einem säurefestem Rührbehälter mit säurefestem Rührwerk erfolgen, wobei nach dieser Reaktion der größte Teil der freien Säure oder Lauge aufgebraucht und damit weniger schädlich für die nachfolgenden Anlagenteile ist.

Zudem kann die erzeugte Rohstoffdispersion nach der Reaktion auch bei Bedarf weiter neutralisiert werden. Ist keine Schwermetallabtrennung erforderlich, kann die Neutralisation bereits im Prozessschritt a) erfolgen. Soll eine Schwermetallabtrennung erfolgen, sollte die Neutralisation über einen pH-Wert von 2, insbesondere über einen pH-Wert von 3 nach der teilweisen Abtrennung der flüssigen Phase im Prozessschritt b) erfolgen, da sonst die Schwermetalle bei pH-Werterhöhung ausfallen. Bevorzugt ist deshalb im Sinne der Erfindung die Einstellung eines pH-Wertes der Rohstoffdispersion vor der Granulierung von 2 bis 10, besonders bevorzugt von 3 bis 9, ganz besonders bevorzugt 4 bis 8.

Zur Einstellung des bevorzugten Anteils an flüssiger Phase kann oder können eine oder mehrere flüssige Komponenten der Rohstoffdispersion zugegeben werden. In einer bevorzugten Ausführungsform der Erfindung wird die flüssige Phase aus Prozessschritt d) zumindest teilweise in den Prozessschritt a) zurückgeführt. Diese flüssige Phase aus Prozessschritt d) kann noch einen Anteil der gelösten Nährstoffkomponenten, beispielsweise Phosphat, enthalten. Alternativ oder zusätzlich können auch Wasser und/oder flüssige nährstoffhaltige Lösungen zugegeben werden. Nährstoffhaltige Lösungen enthalten vorzugsweise Nähr- und/oder Spurenstoffe, die im vorgeschlagenen Düngergranulat enthalten sind.

Das im anorganischen Sekundärphosphat enthaltene Phosphat dient im erzeugten Düngemittel vorteilhafterweise als Nährstoffkomponente. Hohe Phosphatgehalte, insbesondere beim anorganischen Sekundärphosphat sind hier entsprechend erwünscht. Bevorzugt werden deshalb anorganische Sekundärphosphate mit größer 10 % P2O5, besonders bevorzugt mit größer 15 % P2O5 und ganz besonders bevorzugt mit größer 20 % P2O5. Mit anderen Worten sind P2O5-Anteile von größer 10 %, besonders bevorzugt von größer 15 % und ganz besonders bevorzugt von größer 20 % bevorzugt. Daneben kann das anorganische Sekundärphosphat weitere Komponenten enthalten. Vorteilhaft ist, wenn weitere Nährstoffkomponenten enthalten sind, so beispielsweise N, K, Mg oder andere Spurennährstoffe.

Im vorgeschlagenen Verfahren reagiert/reagieren das oder die anorganischen Sekundärphosphate mit mindestens einem Reaktionsmittel. Dabei wird die Löslichkeit des im anorganischen Sekundärphosphat enthaltenen Phosphats vorteilhafterweise erhöht. Soll auch eine zumindest teilweise Schwermetallabscheidung erfolgen, ist es im Sinne der Erfindung bevorzugt, dass das Reaktionsmittel dazu eingerichtet ist, auch einen - vorzugsweise möglichst hohen - Teil der enthaltenen Schwermetalle zu lösen. Das Reaktionsmittel wird insbesondere so ausgewählt, dass es die genannten Anforderungen vorzugsweise beim Aufgeben erfüllt.

Der im anorganischen Sekundärphosphat vorhandene Phosphatanteil weist typischerweise eine verhältnismäßig geringe Löslichkeit auf. Entsprechend sind solche Stoffe, wie beispielsweise Klärschlammaschen, nur bedingt als Düngemittel geeignet. Typischerweise zeigen diese anorganischen Sekundärphosphate eine Wasserlöslichkeit von kleiner als 30 % und eine Neutralammoniumcitratlöslichkeit von kleiner als 50%, vorzugsweise jeweils bezogen auf den Gesamtphosphatgehalt im anorganischen Sekundärphosphat. Für einen sinnvollen Einsatz als Düngemittel ist es im Sinne der Erfindung bevorzugt, dass dieses unzureichend lösliche Phosphat in ein besser lösliches und damit besser pflanzenverfügbares Phosphat umgewandelt wird. Die Umwandlung erfolgt erfindungsgemäß durch zumindest teilweise Reaktion des anorganischen Sekundärphosphats mit mindestens einem Reaktionsmittel. Das Reaktionsmittel ist vorzugsweise dazu eingerichtet, zumindest einen Teil des im anorganischen Sekundärphosphat enthaltenen Phosphates zu lösen und/oder mit diesem so zu reagieren bzw. das Phosphat durch Reaktion umzuwandeln, dass ein besser neutral-ammoniumcitratlösliches Phosphat entsteht. Das vorzugsweise durch das Reaktionsmittel gelöste Phosphat bildet im anschließenden Prozess, zum Beispiel durch Fällung, Umkristallisation oder bei der Trocknung, vorteilhafterweise ein besser neutral-ammoniumcitratlösliches Phosphat als im anorganischen Sekundärphosphat. Der Begriff "besser neutral-ammoniumcitratlöslich" bedeutet im Sinne der Erfindung bevorzugt, dass die Neutralammoniumcitratlöslichkeit des Phosphates im anorganischen Sekundärphosphat nach der Reaktion mit dem Reaktionsmittel höher ist. Bevorzugt ist dabei eine Erhöhung der Neutralammoniumcitratlöslichkeit um größer als 20 %, besonders bevorzugt ist eine Erhöhung um größer 50 %. Ein entsprechendes Berechnungsbeispiel kann wie folgt aussehen: die Neutralammoniumcitratlöslichkeit des Phosphatanteils aus dem unbehandeltem Sekundärphosphat von 50 % wird durch die Reaktion mit dem Reaktionsmittel um 20 % auf 60% erhöht. Bei Einsatz von Säuren unterscheidet sich das vorgeschlagene Verfahren insbesondere dadurch vom Stand der Technik, dass das Phosphat zumindest teilweise reagiert und die Löslichkeit erhöht wird.

Durch beispielsweise die Art und Konzentration des Reaktionsmittels, die Reaktionsführung und Reaktionszeit kann Einfluss auf die resultierende Neutralammoniumcitratlöslichkeit des anorganischen Sekundärphosphates genommen werden. Erfindungsgemäss weist der Phosphatanteil aus dem anorganischen Sekundärphosphat anschließend im erzeugten Düngergranulat eine Neutralammoniumcitratlöslichkeit von größer als 60 %, bevorzugt größer als 70 %, besonders bevorzugt größer als 80 % auf. Durch die bevorzugte Reaktion bzw. Umwandlung des Phosphates und die bevorzugte resultierende Neutralammoniumcitratlöslichkeit aus dem anorganischen Sekundärphosphat werden vorteilhafterweise eine bessere Phosphat-Pflanzenverfügbarkeit und damit eine verbesserte Düngewirkung erzielt.

Es ist im Sinne der Erfindung bevorzugt, dass durch die Reaktion zwischen anorganischem Sekundärphosphat und Reaktionsmittel die Löslichkeit des Phosphates aus dem anorganischem Sekundärphosphat erhöht wird. Wie dargestellt, wird die Löslichkeit von Phosphat bei Düngemitteln mittels unterschiedlicher Methoden ermittelt. Die P-Löslichkeit wird vorzugsweise festgelegt durch die Art der P-Bindung und das Lösungsmilieu. Durch die Art der Reaktionsführung im Prozessschritt a) kann auf die Bindung des P, also auf die sich ausbildenden Phosphatphasen, Einfluss genommen werden. Dies kann beispielsweise durch die Art und Konzentration des Reaktionsmittels, die Reaktionszeit und/oder die Prozesstemperatur geschehen.

Erfindungsgemäss wird die Reaktionsführung vorzugsweise so gesteuert, dass der Phosphatanteil aus dem anorganischen Sekundärphosphat anschließend im erzeugten Düngergranulat eine Neutralammoniumcitratlöslichkeit von größer als 60 % und eine Wasserlöslichkeit von kleiner als 40 %, aufweist. Durch die Einstellung der Löslichkeiten in dieser Form wird bewirkt, dass das Phosphat über etwa eine Wachstumsperiode tatsächlich auf dem Feld für die Pflanzen ausreichend gut pflanzenverfügbar ist, jedoch in dieser Zeit nicht ausgewaschen wird. Eine Auswaschung kann typischerweise erfolgen, wenn eine sehr gute Wasserlöslichkeit, also deutlich höher also hier vorgesehen, vorhanden ist. In einer besonders bevorzugten Ausführungsform der Erfindung wird für den Phosphatanteil aus dem anorganischen Sekundärphosphat im erzeugten Düngergranulat eine Neutralammoniumcitratlöslichkeit von größer als 80 % und eine Wasserlöslichkeit von kleiner als 30 % eingestellt. Überraschenderweise hat sich gezeigt, dass dadurch insbesondere Winterroggen eine besonders günstige P-Versorgung über eine Wachstumsperiode erfährt. In einer anderen besonders bevorzugten Ausführungsform der Erfindung wird für den Phosphatanteil aus dem anorganischen Sekundärphosphat im erzeugten Düngergranulat eine Neutralammoniumcitratlöslichkeit von größer als 90 % und eine Wasserlöslichkeit von kleiner als 15 % eingestellt. Dieses Verhältnis ist besonders günstig für Weizenpflanzen.

Durch die Art und Konzentration des Reaktionsmittels, die Reaktionsführung und Reaktionszeit kann auch Einfluss auf die Art und den Anteil der gelösten Schwermetalle genommen werden. So bewirkt beispielsweise eine höhere Säurestärke vorzugsweise einen höheren Anteil an gelösten Schwermetallen. Ein höherer Anteil an gelösten Schwermetallen ist in diesem Prozessschritt bevorzugt, da so mehr Schwermetalle im Prozessschritt b) mit der teilweisen Abtrennung der flüssigen Phase abgetrennt und der zumindest teilweise Abtrennung der Schwermetalle im Prozessschritt d) zugeführt werden können.

In einer bevorzugten Ausführungsform der Erfindung wird deshalb der Rohstoffdispersion so viel Säure zugegeben, dass sich ein pH-Wert während der Inkubationszeit von kleiner als 1 einstellt. Dadurch wird bereits ein signifikanter Anteil an Schwermetallen gelöst. In einer besonders bevorzugten Ausführungsform der Erfindung wird der Rohstoffdispersion so viel Säure zugegeben, dass sich ein pH-Wert während der Inkubationszeit von kleiner als 0,5 einstellt. Dabei werden insbesondere die Schwermetalle Arsen und Blei bereits fast vollständig gelöst. Wird der pH-Wert während der Inkubationszeit weiter auf kleiner 0,2, wie in einer ganz besonders bevorzugten Ausführungsform der Erfindung, abgesenkt, gehen auch andere Schwermetalle verstärkt in Lösung.

In einer bevorzugten Ausführungsform der Erfindung wird mindestens ein Reaktionsmittel verwendet, welches mindestens eines der Elementen Stickstoff (N), Schwefel (S), Kalium (K) und/oder Phosphor (P) umfasst, so beispielsweise phosphorige Säure (H3PO3), Phosphorsäure (H3PO4), Salpetersäure (HNO3), Schwefelsäure (H2SO4), schweflige Säure (H2SO3) und/oder Kalilauge (KOH). Durch die Verwendung derartiger Reaktionsmittel werden entsprechend zusätzlich Nährstoffkomponenten, wie Stickstoff, Schwefel, Kalium und/oder Phosphor, in das Granulat eingetragen. Durch eine geeignete Reaktionsabfolge kann vorzugsweise die Nährstoff-Bindungsform der im Reaktionsmittel enthaltenen Nährstoffe, z.B. Stickstoffs und/oder Schwefels, in eine für das Düngemittel geeignete Form umgewandelt werden.

In einer besonders bevorzugten Ausführungsform der Erfindung ist das Reaktionsmittel eine verdünnte oder unverdünnte Phosphorsäure und/oder eine phosphorige Säure oder zumindest ein verdünntes oder unverdünntes Säuregemisch mit anteilig enthaltener Phosphorsäure und/oder phosphoriger Säure. Vorteil dabei ist, dass der Phosphoranteil in der Rohstoffdispersion und damit in den daraus erzeugten Dünger durch das Reaktionsmittel erhöht wird. Damit liefert das Reaktionsmittel vorteilhafterweise nicht nur einen werthaltigen Nährstoffanteil, sondern begünstigt insbesondere die Herstellung von Phosphatdüngern. So können beispielsweise bevorzugt Düngegranulate mit einem Gesamt-P2O5-Gehalt von größer als 35 %, besonders bevorzugt größer als 40 % und einem neutral-ammoniumcitratlöslichen Phosphatanteil davon von größer als 80 %, besonders bevorzugt von größer als 90 % erzeugt werden. Es ist im Sinne der Erfindung insbesondere bevorzugt, dass der Gesamt-Gehalt an P2O5 bei größer als 35 %, besonders bevorzugt größer als 40 % liegt.

Das Zusammenführen der Komponenten der Rohstoffdispersion kann in beliebiger Reihenfolge erfolgen. Notwendig ist im Sinne der Erfindung, dass das Reaktionsmittel im Prozessschritt a) in ausreichender Weise mit zumindest einem Teil des durch das anorganische Sekundärphosphat zugeführten Phosphates reagiert. Der Begriff "in ausreichender Weise reagieren" bedeutet dabei im Sinne der Erfindung, dass sich die gewünschte Verbesserung der Neutralammoniumcitratlöslichkeit des Phosphates einstellt. Darüber hinaus wird vorzugsweise zumindest ein Teil der Schwermetalle gelöst. Entsprechend ist im Prozessschritt a) eine Inkubationzeit im Sinne des Einwirkenlassens des Reaktionsmittels auf das anorganische Sekundärphosphat vorgesehen. Die Inkubation gemäß Prozessschritt a) erfolgt über einen Zeitraum im Bereich von 1 bis 100 Minuten, bevorzugt im Bereich von 5 bis 60 Minuten und besonders bevorzugt im Bereich von 10 bis 30 Minuten. Durch die Reihenfolge des Zusammenführens der Komponenten, der zeitlichen Abfolge und der Inkubationszeit kann beispielsweise Einfluss auf die ablaufende Reaktion und somit auch auf den Anteil der gelösten Schwermetalle und die Neutralammoniumcitratlöslichkeit des Phosphates im erzeugten Düngergranulat genommen werden.

Überraschend wurde festgestellt, dass zur Erhöhung der Ammoniumcitratlöslichkeit eine verhältnismäßig kurze Verweilzeit ausreichend ist. In einer bevorzugten Ausführungsform der Erfindung wird deshalb die Inkubationszeit zwischen 10 und 60 Minuten eingestellt, um insbesondere die Ammoniumcitratlöslichkeit zu erhöhen. In einer besonders bevorzugten Ausführungsform der Erfindung wird die Inkubationszeit auf 10 bis 30 Minuten eingestellt. Hier können ebenfalls hohe Amonniumcitratlöslichkeiten erreicht werden, durch die geringere Inkubationszeit kann vorteilhafterweise die Dimensionierung der Reaktionsbehälter verkleinert werden, so dass entsprechend Prozesskosten gesenkt werden können.

Die Inkubationszeit zur Erzielung der gewünschten Löslichkeiten hängt auch beispielsweise von der Art des eingesetzten Reaktionsmittels ab. So führen starke Säure, wie beispielsweise konzentrierte Mineralsäuren, oder starke Basen, wie beispielsweise konzentriertes NaOH, typischerweise zu einer beschleunigten Reaktion, und eine kürzere Inkubationszeit ist erforderlich. Werden hingegen schwächer Säuren, wie beispielsweise organische Säuren, wie beispielsweise Zitronen- oder Oxalsäure, eingesetzt, ist eine längere Inkubationszeit erforderlich. In einer bevorzugten Ausführungsform der Erfindung wird die Inkubationszeit in einem Bereich zwischen 30 und 100 Minuten eingestellt.

Zur Erhöhung der Wasserlöslichkeit sind überraschenderweise längere Reaktionszeiten erforderlich. Deshalb wird in einer anderen bevorzugten Ausführungsform der Erfindung die Inkubationszeit zwischen 60 bis 100 Minuten eingestellt.

Eine höhere Prozesstemperatur erhöht vorzugsweise die Reaktionsgeschwindigkeit zwischen anorganischem Sekundärphosphat und dem Reaktionsmittel und verkürzt damit die notwendige Inkubationszeit. In einer bevorzugten Ausführungsform der Erfindung wird deshalb die Prozesstemperatur bei der Inkubation des anorganischen Sekundärphosphates und des Reaktionsmittels oberhalb von 30 °C, besonders bevorzugt oberhalb von 40 °C und ganz besonders bevorzugt oberhalb von 50 °C eingestellt.

Die vorgesehene Trennung der Reaktion zur zumindest anteiligen Phosphatumwandlung aus dem anorganischen Sekundärphosphat von der Granulation löst vorzugsweise das technische Problem, dass die exotherme, zum Teil spontan und heftig ablaufende Reaktion den Granulationsprozess stark behindert. Die erfindungsgemäß vorgesehene Trennung der Reaktion von der Granulation ist dabei vorzugsweise im technischen Sinne so zu verstehen, dass im Protzessschritt a) der weitaus größte Anteil der Reaktion erfolgt. Es kann jedoch auch bevorzugt sein, dass die Reaktion auch im Prozessschritt b) und c) fortläuft, dann jedoch in deutlich verminderter Intensität. Durch das Einhalten der erfindungsgemäß vorgesehenen Inkubationszeit ist die noch vorhandene Intensität des möglichen Fortlaufens der Reaktion nicht mehr für den Granulationsprozess hinderlich. In einer bevorzugten Ausführungsform der Erfindung wird der Prozessschritt a) vorzugsweise so gesteuert, dass mehr als 80 % der über das gesamte Verfahren erreichten Neutralammoniumcitratlöslichkeiterhöhung des anorganischen Sekundärphosphats im Prozessschritt a) erreicht werden. Das heißt, würde man die Reaktion nach dem Prozessschritt a) durch schnelle Trocknung abstoppen, zeigt das mit dem Reaktionsmittel behandelte Phosphat aus dem anorganischen Sekundärphosphat dieses so abgestoppten Reaktionsprodukt bereits mindestens 80 % der Neutralammoniumcitratlöslichkeit eines Reaktionsproduktes, welches nicht abgestoppt wird, sondern Prozessschritt b) und c) noch durchläuft.

Der Rohstoffdispersion können im Prozessschritt a) und/oder nach Prozessschritt b) weitere Komponenten zugegeben werden. Weitere Komponenten sind hier allgemein solche Stoffe, die die Prozessführung und/oder die Eigenschaften der Düngegranulate verbessern können, so beispielsweise nährstoffhaltige Komponenten, Dispergier- und Entschäumungsmittel, Strukturstoffe, Mittel zur pH-Werteinstellung, Urease-Hemmer, Ammonium-Stabilisatoren, Huminsäure, organische Säuren und/oder Wasser.

So werden in einer bevorzugten Ausführungsform der Erfindung mindestens eine oder mehrere nährstoffhaltige Komponente(n) als weitere Komponenten zugegeben. Nährstoffhaltige Komponenten sind im Sinne der Erfindung vorzugsweise Stoffe, die das Nährstoffangebot für die angebauten Pflanzen liefern oder ergänzen, um das Wachstum und die Entwicklung der Pflanzen zu steuern beziehungsweise zu unterstützen. Die nährstoffhaltigen Komponenten beinhalten beispielsweise Stickstoff (N), Phosphat (P), Kalium (K), Magnesium (Mg), Schwefel (S), lebensnotwendige Spurenelemente einzeln oder in Kombination. Beispielsweise durch die Möglichkeit zur Zugabe von nährstoffhaltigen Komponenten kann die Nährstoffzusammensetzung im Düngergranulat besonders genau an die boden- und/oder pflanzenspezifischen Bedürfnisse angepasst werden. Zudem kann dadurch auch die typische Schwankungsbreite der Zusammensetzung des anorganischen Sekundärphosphates kompensiert werden, um so eine gleichmäßige Düngerqualität sicherzustellen.

In einer besonders bevorzugten Ausführungsform der Erfindung werden zusätzliche Phosphatträger, zum Beispiel Ammoniumphosphat, Kaliumphosphat, Kristallisationsprodukte aus der Phosphorelimination, wie Struvit, Brushit oder hydroxyxlapatitähnliche Ca-P-Phase, in einer Menge zugegeben, dass dadurch ein Düngergranulat mit einem Gesamt-P2O5-Gehalt von größer als 35 %, besonders bevorzugt größer als 40 % und einem neutral-ammoniumcitratlöslichen Phosphatanteil davon von größer als 80 %, besonders bevorzugt von größer als 90 % resultiert. In einer anderen bevorzugten Ausführungsform der Erfindung werden Kristallisationsprodukte aus der Phosphorelimination, wie Struvit, Brushit oder hydroxyxlapatitähnliche Ca-P-Phase, in einem Bereich von 1 bis 70 %, bezogen auf das fertige pedosphärenverbessernde Granulate, so zugegeben, dass dadurch ein Nährstoffgranulat mit einem Gesamt-P2O5-Gehalt von größer als 15 %, einem neutral-ammoniumcitratlöslichen Phosphatanteil von größer 60% davon und einer Wasserlöslichkeit von kleiner als 30%, ebenfalls bezogen auf dem Gesamt-P2O5-Gehalt resultiert. In einer ganz besonderen Ausführungsform der Erfindung werden Kristallisationsprodukte aus der Phosphorelimination im Bereich von 10 bis 40 %, bezogen auf das fertige pedosphärenverbessernde Granulate, zugegeben, wobei Nährstoffgranulate mit einem Gesamt-P2O5-Gehalt von größer als 15 %, mit einem neutral-ammoniumcitratlöslichen Phosphatanteil davon, bezogen auf Gesamt-P2O5, von größer als 85 % und einem wasserlöslichen Phosphatanteil, bezogen auf Gesamt-P2O5), von kleiner als 20 % jeweils auf die Zusammensetzung des Nährstoffgranulates bezogen resultieren.

Als weitere Komponenten können ein oder mehrere Strukturstoff(e) eingesetzt werden, so beispielsweise Torf, Humus, Pyrolysesubstrate aus Biomasse, Biokohle aus der Hydrothermale Carbonisierung (HTC), aber auch Klärschlämme, Gärreste, Gülle, Tierausscheidungen, Tier- und/oder Fischmehl. Der Begriff "Gärrest" beschreibt im Sinne der Erfindung den flüssigen und/oder festen Rückstand, der bei der Vergärung von Biomasse zurückbleibt. Der Begriff "Gülle" beschreibt im Sinne der Erfindung bevorzugt ein Gemisch aus Kot und Harn von landwirtschaftlichen Nutztieren in Kombination mit Einstreu mit wechselndem Wassergehalt. Je nach Art und Konzentration dieses oder dieser Strukturstoff(e) kann die Düngewirkung eingestellt und/oder eine bodenverbessernde Wirkung beim Einsatz der Düngergranulate erzielt werden. Die Düngewirkung wird vorzugsweise dadurch beeinflusst, dass durch das Zufügen des Strukturstoffs die Struktureigenschaften des erzeugten Düngergranulates und damit dessen Eigenschaften, wie beispielsweise die Porosität, Größe der Poren, die Festigkeit und/oder Löslichkeit, eingestellt werden können. Dadurch kann beispielsweise die Nährstofffreisetzung gezielt an das Pflanzenwachstum und den zeitlich abhängigen Nährstoffbedarf der Pflanze angepasst werden. Auch eine gezielte Bodenverbesserung kann durch das Zufügen eines Strukturstoffs in dem Düngegranulat erreicht werden, wenn der Strukturstoff beispielsweise zu einer Humusbildung, zur Verbesserung der Bodenstruktur und/oder zu einer Verbesserung des Luft- und/oder Wasserhaushalts des Bodens bei Anwendung der Düngemittel in der Landwirtschaft führt. Dies kann beispielsweise das Wurzelwachstum fördern, das Bodenleben aktivieren und/oder die Pflanzenvitalität gegen Stresssituationen stimulieren.

Es ist in einer Ausführungsform der Erfindung bevorzugt, dass in Summe zwischen 5 bis 50 % Strukturstoff bezogen auf das fertige pedosphärenverbessernde Granulate zugegeben werden, da überraschenderweise festgestellt wurde, dass in diesem Konzentrationsbereich insbesondere die Humusbildung sehr stark gefördert und dadurch eine besonders gute Boden- und Strukturverbesserung bewirkt wird. Ganz besonders bevorzugt ist dabei, dass das gebildete Granulat einen Kohlenstoffanteil von größer 5 bis 25 % aufweist, da unerwartet festgestellt wurde, dass gerade in diesem Bereich des Kohlenstoffanteils zusätzlich zu der Humusbildung insbesondere der Luft- und Wasserhaushalt des Bodens besonders günstig für das Wachstum von beispielsweise Wintergerste und Mais eingestellt werden kann.

Die Düngewirkung wird vorzugsweise dadurch beeinflusst, dass durch das Zufügen des Strukturstoffs die Struktureigenschaften des erzeugten pedosphärenverbessernden Granulates und damit dessen Eigenschaften, wie beispielsweise die Porosität, Größe der Poren, die Festigkeit oder Löslichkeit eingestellt werden. Dadurch können beispielsweise die Nährstofffreisetzung gezielt an das Pflanzenwachstum und den zeitlich abhängigen Nährstoffbedarf der Pflanze angepasst werden kann. Deshalb wird in einer anderen bevorzugten Ausführungsform der Erfindung zwischen 0,1 % bis 5 % Strukturstoff zugegeben. Durch diese verhältnismäßig geringe Konzentration können besonders viele Nährstoffkomponenten im Düngemittel integriert werden, wodurch die Düngewirkung der Granulate in diesem Ausführungsbeispiel grundsätzlich wesentlich verstärkt. Festgestellt wurde nun aber überraschenderweise, dass gerade der Anteil an Strukturstoff in diesem Bereich zu einer Porenstruktur führt, die die Löslichkeit dieser Nährstoffkomponenten sehr begünstigt. Dadurch sind die Nährstoffe wesentlich besser pflanzenverfügbar. Besonders bevorzugt ist dabei ein Anteil an Strukturstoff von 1 - 3,0 %, da gerade in diesem Bereich eine gute Porosität für eine gute Löslichkeit gegeben und zusätzlich in diesem Konzentrationsbereich eine besonders gute Verteilung kleiner Poren in der Grundstruktur gegeben sind, woraus vorteilhafterweise eine besonders hohe Festigkeit resultiert.

Sollen als Strukturstoffe Reststoffe, wie beispielsweise insbesondere Klärschlamm, eingesetzt werden, so besteht grundsätzlich Kontaminationsgefahr und die Gefahr der Verbreitung von Krankheitserreger und damit die Möglichkeit, dass Krankheitserreger über Nahrung und Futtermittel zu Mensch und Tier gelangen und diese damit gefährden. Deshalb wird bei Einsatz von einem oder mehreren Reststoffen als Strukturstoff in einer bevorzugten Ausführungsform der Erfindung ein Hygienisierungsschritt zur Unterbrechung von Infektionskreisläufen durch Abtötung von Krankheitserregern, Bakterien etc. in das vorgeschlagene Verfahren integriert. Zur Hygienisierung stehen Verfahren, wie beispielsweise das Zumischen von chemischen oder bakterientötenden Agenzien, eine Hygienisierung durch eine extreme pH-Wert-Verschiebung, beispielsweise durch Zugabe von gebranntem Kalk oder Kalkhydrat, oder eine thermische Behandlung zur Verfügung. Ein solcher Verfahrensschritt zur Hygienisierung des oder der kritischen Reststoffe kann an geeigneter Stelle im Verfahren durchgeführt werden. So kann eine solche Hygienisierung der Reststoffe vor der Zugabe des Reststoffs als Strukturstoff zur Rohstoffdispersion erfolgen. Auf diese Weise kann beispielsweise ein Reststoff, wie beispielsweise Klärschlamm, mit gebranntem Kalk zunächst separat gemischt und das Gemisch nach ausreichend langer Einwirkzeit der Grunddispersion zugegebenen werden. In einer besonders bevorzugten Ausführungsform der Erfindung erfolgt die Hygienisierung nach Zugabe des kritischen Reststoffs als Strukturstoff zu der Rohstoffdispersion durch eine thermische Behandlung von mindestens 10 Minuten, bevorzugt länger als 20 Minuten und oberhalb 60 °C, besonders bevorzugt oberhalb 75 °C. Durch diese Temperatureinwirkung werden die Pathogene vorteilhafterweise weitgehend abgetötet. Die thermische Behandlung der kritischen Reststoffe kann in dieser Ausführungsform der Erfindung beispielsweise im Prozessschritt a) und/oder d) erfolgen, zum Beispiel indem die Rohstoffdispersion aufgeheizt wird oder sich durch exotherme Reaktionen selbst erwärmt.

In einer bevorzugten Ausführungsform der Erfindung werden Huminsäure und/oder Fulvosäure und/oder deren Salze, wie beispielsweise Humate und/oder Fulvate, zugegeben. Diese Stoffe haben vorteilhafterweise wachstumsfördernde Eigenschaften. So wird die Nährstoffaufnahmekapazität der Wurzel wesentlich erhöht und regt somit das Wachstum an. Durch ihre Zugabe werden das Pflanzenwachstum und die Zellbildung gefördert. Sie stimulieren die Zellmembranen sowie die Stoffwechselaktivitäten und erhöhen dadurch die Keimraten. Auch werden wichtige Pflanzenenzyme besonders gut angeregt. Die kräftige Wurzelausbildung unterstützt die Nährstoffaufnahmekapazität. Die so gestärkten Pflanzen sind deutlich weniger anfällig gegen Krankheiten. Durch die Zugabe dieser Stoffe kann die P-Aufnahme der Pflanzen erhöht werden, da es die P-Adsorption des Bodens blockiert und durch Komplexierung von Ca, Al, Fe das Ausfällen von P in schwerlösliche Verbindungen verhindert. Überraschenderweise wurde festgestellt, dass durch Zugabe dieser Stoffe in einem Bereich von 0,1 - 25 % (bezogen auf das fertige pedosphärenverbessernde Granulate) eine deutliche Steigerung des pflanzenverfügbaren Phosphats im Boden und damit eine erhöhte P-Aufnahme der Pflanzen resultieren. Besonders bevorzugt ist die Zugabe dieser Stoffe in einem Anteil zwischen 0,1 bis 10 % (bezogen auf das fertige pedosphärenverbessernde Granulate), da bereits in diesem Mengenbereich eine erhebliche Steigerung der Düngewirkung erreicht wird und folglich die notwendige Düngermenge entsprechend um bis zu 40 % reduziert werden kann. Ganz besonders ist die Zugabe dieser Stoffe in einem Mengenbereich von 0,1 - 5 % (bezogen auf das fertige pedosphärenverbessernde Granulate), da in diesem Bereich ein besonders günstiges wirtschaftliches Verhältnis zwischen den Kosten für diese Stoffe und den resultierenden verbesserten Eigenschaften resultiert.

In einer weiterhin bevorzugten Ausführungsform der Erfindung werden organische Säure in fester und/oder flüssiger Form zugegeben. Organische Säuren sind beispielsweise Ascorbinsäure, Essigsäure, Ameisensäure, Gluconsäure, Äpfelsäure, Bernsteinsäure, Oxalsäure, Weinsäure und Zitronensäure. Organische Säuren spielen bei der Phosphataufnahme der Pflanzen aus dem Boden eine wesentliche Rolle. Insbesondere durch das Vorhandensein von organischen Säuren am Wurzelwerk können die Pflanzen ausreichend Phosphat aufnehmen, wobei typischerweise Mikroorganismen diese organischen Säuren im Ökosystem bilden. Überraschenderweise wurde nun festgestellt, dass die Phosphataufnahme der Pflanzen erhöht wird, wenn im zugeführten Düngergranulat bereits anteilig eine oder mehrere organische Säuren bevorzugt in Summe in einem Bereich von 0,1 bis 30 % (bezogen auf das fertige pedosphärenverbessernde Granulate) integriert sind. Vermutet wird, dass diese mit zugeführten organischen Säuren dadurch vorzugsweise direkt eine vergleichbare Funktion im Wurzelbereich der Pflanze übernehmen, ohne dass diese organischen Säuren erst durch Mikroorganismen erzeugt werden müssen. Bevorzugt sind Zitronensäure, Oxalsäure und/oder Weinsäure einzeln oder in Kombination eingesetzt, da diese organischen Säuren verhältnismäßig kostengünstig und in ausreichenden Mengen verfügbar sind. Besonders bevorzugt ist der Einsatz von Zitronensäure, Oxalsäure und Weinsäure einzeln oder in Kombination in einem Mengenbereich 0,1 % bis 10 % (bezogen auf das fertige pedosphärenverbessernde Granulate), da die aufnahmeverbessernde Wirkung dieser Säuren im Verhältnis zu den Rohstoffkosten hier besonders günstig ist. Die aufgeführten Anteile an organischen Säuren im Düngegranulat können dabei entweder wie zusätzlich als weitere Komponente zugegeben werden und/oder bei Einsatz organischer Säuren als Reaktionsmittel nach der Reaktion (zumindest anteilig weiter in diesem Mengenbereich) vorliegen und so in das Düngergranulat überführt werden.

Es können auch Entschäumungs- und Dispergiermittel als weitere Komponenten zugegebenen werden. Entschäumungsmittel sind beispielsweise dann von Vorteil, wenn bei der Zusammenführung einzelner Stoffe, zum Beispiel beim Herstellen der Grunddispersion, eine starke gasbildende Reaktion einsetzt oder sich ein Schaum ausbildet. Durch das Dispergiermittel kann beispielsweise die Viskosität eingestellt werden.

Auch können Mittel zur pH-Wert-Einstellung, so beispielsweise Laugen, Hydroxide, basische Salze, Ammoniak oder gebrannter Kalk, als weitere Komponenten zugefügt werden. Dadurch können beispielsweise noch vorhandene Säurereste, beispielsweise bei Einsatz oder Bildung von Säuren, neutralisiert und/oder der pH-Wert des erzeugten Düngemittels gezielt eingestellt werden.

Die eingesetzten Stoffe, wie anorganisches Sekundärphosphat, weitere Komponenten, können einzeln, in Kombination oder als gesamte Rohstoffdispersion gemahlen werden. Dies ist beispielsweise dann vorteilhaft, wenn die vorliegende Partikel- oder Aggregatgröße einzelner oder mehrerer Einsatzstoffe nicht ausreichend fein genug ist, um beispielsweise eine ausreichende Homogenität zu erreichen oder es dadurch zu prozesstechnischen Schwierigkeiten, beispielsweise Verstopfung von Düsen, kommen kann. Durch die Reduzierung der Partikel- bzw. Aggregatgröße kann dies vorteilhafterweise verbessertet werden. Auch kann die Löslichkeit von Stoffen oder beinhalteten Verbindungen verbessert werden, so beispielsweise die Löslichkeit phosphathaltiger Aschen oder Schlacken. Auch kann eine Vermahlung der Rohstoffdispersion beispielsweise im Prozessschritt a) und/oder c) erforderlich sein, wenn sich durch Reaktion innerhalb der Rohstoffdispersion Agglomerate, Aggregate oder Fällungsprodukte bilden, die den weiteren Prozessablauf, zum Beispiel das Fördern oder Pumpen oder Verdüsen, stören. Je nach Art des zu vermahlenden Stoffes und der gewünschten Korngröße und Korngrö-ßenverteilung können unterschiedliche Trocken- oder Nassmahl-Technologien mit oder ohne Mahlhilfen eingesetzt werden. Die zur Trocken- oder Nassmahlung verwendete Aggregate können beispielsweise Kugelmühlen, Stiftmühlen, Strahlmühle, Perlmühlen, Rührwerkskugelmühlen, Hochleistungsdispergierer und/oder Hochdruckhomogenisatoren sein.

Die Reihenfolge der Zugabe der weiteren Komponenten kann dabei je nach Erfordernis der Prozessführung und/oder der eventuell gewünschten Reaktionsabfolge erfolgen. So kann bzw. können beispielsweise im Prozessschritt a) alle oder ein Teil der weiteren Komponenten zugegeben werden. Die Zugabe kann dabei zu der bereits erzeugten Dispersion aus mindestens einem anorganischen Sekundärrohstoff und mindestens einem Reaktionsmittel und/oder aber auch während der Erzeugung dieser Dispersion zugegebenen werden. Bevorzugt ist dabei auch, dass alle oder ein Teil der weiteren Komponenten vorgelegt werden und erst dazu die Dispersion aus mindestens einem anorganischen Sekundärphosphat und mindestens einem Reaktionsmittel oder die Komponenten zur Bildung dieser Dispersion zugeführt wird.

In einer bevorzugten Ausführungsform der Erfindung wird mindestens ein anorganisches Sekundärphosphat mit mindestens einem Reaktionsmittel vorzugsweise in Kombination mit Wasser vermischt. Dabei kann die Zugabe des Wassers vor, mit und/oder nach dem Reaktionsmittel erfolgen. Dadurch können zunächst das oder die Reaktionsmittel mit zumindest Teilen des Phosphates aus dem oder den anorganischen Sekundärphosphat(en) ungestört von anderen Komponenten reagieren. Je nach Art der Komponenten kann die Reaktion zwischen Reaktionsmittel und Phosphat aus dem anorganischen Sekundärphosphat durch diese Komponenten gestört, unterbunden oder in der Reaktionsgeschwindigkeit vermindert werden, beispielsweise wenn dadurch der pH-Wert verändert wird und/oder eine, beispielsweise teilweise, Neutralisation des Reaktionsmittels erfolgt. Besonders bevorzugt ist bei dieser Ausführungsform der Erfindung, dass die flüssige Phase aus Prozessschritt d) bzw. eventuell weitere Komponenten erst nach 5 bis 60 Minuten, besonders bevorzugt 10 bis 30 Minuten, zugegeben wird beziehungsweise werden.

Alternativ können alle oder ein Teil der weiteren Komponenten erst nach dem Prozessschritt b) vor oder bei der Granulation zugeführt werden. Dies kann für die Prozessschritte b) und/oder d) vorteilhaft sein, wenn beispielsweise die zusätzlichen Komponenten bei Zugabe vor Prozessschritt b) entweder als Feststoff vorliegen. Es kann im Sinne der Erfindung auch bevorzugt sein, dass die zusätzlichen Komponenten gelöst werden

Im Prozessschritt b) des vorgeschlagenen Verfahrens wird aus der im Prozessschritt a) erzeugten Rohstoffdispersion ein Teil der flüssigen Phase abgetrennt und Prozessschritt d) zugeführt. Der verbleibende Rückstand aus dem festen und/oder ungelösten Anteil der Rohstoffsuspension mit dem verbleibenden Anteil der flüssigen Phase, die nicht abgetrennt wurde, wird dem Prozessschritt c) zugeführt.

Die Menge an abzutrennender flüssiger Phase in diesem Prozessschritt wird ausgewählt nach den Erfordernissen der anschließenden Granulation im Prozessschritt c) und/oder den Erfordernissen bei einer optionalen zumindest teilweisen Schwermetallabtrennung in Prozessschritt d). So entscheidet beispielsweise die Art der gewünschten Granulierung über den abzutrennenden Anteil an flüssiger Phase.

In einer bevorzugten Ausführungsform der Erfindung wird so viel flüssige Phase abgetrennt, dass der beim Feststoff verbleibende Anteil an nicht-abgetrennter flüssiger Phase kleiner als 25 %, bevorzugt kleiner als 20 % und besonders bevorzugt kleiner als 15 % ist. Ein solcher Anteil soll im Sinne der Erfindung vorzugsweise als "erdfeucht" bezeichnet werden. Vorteil eines solchen Anteils an nicht-abgetrennter flüssiger Phase ist, dass eine erdfeuchte Mischung direkt granuliert oder extrudiert werden kann und verhältnismäßig wenig flüssige Phase, beispielsweise insbesondere Wasser, zur Erzeugung des insbesondere trockenen Düngemittelgranulats verdampft werden muss. Dies spart erhebliche Energiekosten.

In einer anderen bevorzugten Ausführungsform der Erfindung wird so viel flüssige Phase abgetrennt, dass der beim Feststoff verbleibende Anteil an nicht-abgetrennter flüssiger Phase größer als 25 %, besonders bevorzugt größer als 35 % ist. In einer solchen Suspension können die Komponenten sehr homogen vermischt werden und es resultiert vorteilhafterweise eine bessere Homogenität der Düngemittelgranulate.

In einer anderen bevorzugten Ausführungsform der Erfindung wird so viel flüssige Phase abgetrennt, dass der abgetrennte feuchte Feststoff als erdfeucht bezeichnet werden kann. Der Begriff "erdfeucht" definiert im Kontext der vorliegenden Erfindung eine Konsistenz. In der Betontechnologie wird allgemein ein Beton steifer Konsistenz mit einem Wasserzementwert ≤ 0,40 als erdfeuchter Beton bezeichnet. In Analogie zu dieser Definition ist unter einer erdfeuchten Rohstoffmischung ein Konsistenzbereich des feuchten Feststoffs vergleichbar mit einer Konsistenz wie erdfeuchter Beton zu verstehen. Auf der einen Seite ist dieser bevorzugte Konsistenzbereich durch eine verhältnismäßig trockene Mischung jedoch mit mehr als 5 % Feuchte (bezogen auf das Gemisch feuchter Feststoff) begrenzt, die sich gerade nicht in der Hand formen lässt, also noch nicht wie Pulver zerfällt. Auf der anderen Seite ist der Bereich vorzugsweise dadurch begrenzt, dass sich die Rohstoffmischung in der Hand ballen und - beispielsweise wie ein Schneeball - formen lässt und nicht ohne Krafteinwirkung, wie beispielsweise Vibration, zerfließt. In dieser bevorzugten Ausführungsform der Erfindung beträgt die Feuchte 5 % bis weniger als 40 %. Mit anderen Worten ist es im Sinne der Erfindung bevorzugt, dass die Feuchte in einem Bereich zwischen 5 und 40 % liegt. Da die nicht-abgetrennte flüssige Phase auch gelöst vorliegende Komponenten beinhalten kann, die bei der Trocknung als Feststoff verbleiben, liegt der Prozentgehalt der nicht-abgetrennten flüssigen Phase in dieser bevorzugten erdfeuchten Mischung in einem Bereich zwischen 10 und 70 %.

In einer besonders bevorzugten Ausführungsform beträgt die Feuchte 10 % bis weniger 30 %. Mit anderen Worten ist es im Sinne der Erfindung bevorzugt, dass die Feuchte in einem Bereich zwischen 10 und 30 % liegt. Vorteil dieser Ausführungsform der Erfindung ist es, dass eine erdfeuchte Mischung mit diesem Feuchtegehalt typischerweise direkt mittels Granulierteller granulierbar ist.

In einer anderen besonders bevorzugten Ausführungsform der Erfindung wird dieser bevorzugte Bereich für die Feuchte von 10 % bis weniger 30 % durch die Zugabe von weiteren, vorzugsweisefesten und/oder weitgehend trockenen Komponenten eingestellt. Vorteilhaft ist dabei, dass nach der Fest-/Flüssigtrennung zunächst der prozentuale nicht-abgetrennte Anteil an flüssiger Phase bzw. der Feuchte beim Feststoff höher sein kann, was die Fest-/Flüssigtrennung vorteilhafterweise vereinfacht und energetisch günstiger macht. Durch die Zugabe von weiteren Komponenten, die vorzugsweise trocken und/oder zumindest eine niedrige Feuchte aufweisen, wird der resultierende prozentuale Anteil der Feuchte im Gesamtgemisch vorzugsweise soweit reduziert, dass der bevorzugte Feuchtegehalt erhalten wird. In einer ganz bevorzugten Ausführungsform der Erfindung wird so viel flüssige Phase abgetrennt, dass der beim Feststoff verbleibende Anteil an nicht-abgetrennter flüssiger Phase in einem bevorzugten Bereich zwischen 30 und 70 % (bezogen auf das Gesamtgemisch des abgetrennten feuchten Feststoffs) liegt.

Soll eine zumindest teilweise Schwermetallabscheidung im Prozessschritt d) erfolgen, kann der Anteil an abzutrennender flüssiger Phase vorzugsweise auch danach ausgerichtet werden. So werden im Prozessschritt a) durch Einwirken des Reaktionsmittels vorzugsweise zumindest ein Teil der Schwermetalle gelöst. Durch das Abtrennen eines Teils der flüssigen Phase, in der sich insbesondere die gelösten Schwermetalle befinden, ist es im Sinne der Erfindung bevorzugt, dass zunächst ein möglichst hoher Anteil dieser gelösten Schwermetalle von dem ungelösten Anteil abgetrennt wird.

Dies wird im Sinne der Erfindung vorzugsweise dadurch erreicht, dass ein möglichst großer Anteil an schwermetallhaltiger flüssiger Phase in diesem Prozessschritt von der festen Phase abgetrennt wird. In einer bevorzugten Ausführungsform der Erfindung wird deshalb so viel flüssige Phase abgetrennt, dass der feste Anteil nur noch einen verbleibenden, nicht von der festen Phase abgetrennten Anteil an flüssiger Phase von weniger als 70 %, besonders bevorzugt weniger als 60 % und ganz besonders bevorzugt weniger als 50 % bezogen auf den feuchten ungelösten Anteil enthält. Es ist im Sinne der Erfindung insbesondere bevorzugt, dass der feste Anteil weniger als 70 %, besonders bevorzugt weniger als 60 % und ganz besonders bevorzugt weniger als 50 % bezogen auf die feuchten Feststoffe beträgt.

Die Abtrennung eines möglichst hohen Anteil dieser gelösten Schwermetalle von dem ungelösten Anteil kann im Sinne der Erfindung vorzugsweise auch dadurch erreicht werden, dass Konzentration der Schwermetalle in der beim Feststoff verbleibenden, vorzugsweise nicht abgetrennten, flüssigen Phase möglichst klein ist. Vorausgesetzt eine konstante Gesamtmenge an gelösten Schwermetallen wird die Konzentration der Schwermetalle in der flüssigen Phase vorzugsweise maßgeblich durch die Gesamtmenge an flüssiger Phase bestimmt. Wird also der Rohstoffdispersion vor der teilweisen Abtrennung der flüssigen Phase eine höhere Gesamtmenge an flüssiger Phase zugegeben, ist darin die Konzentration der Schwermetalle vorzugsweise kleiner, vorzugsweise trotz gleicher Gesamtmenge an gelösten Schwermetallen. Trennt man nun in analoger Weiser so ab, dass die gleiche Menge an flüssiger Phase bei der festen Phase verbleibt, enthält dieses Gemisch vorzugsweise weniger gelöste Schwermetalle in Summe und es können mehr Schwermetalle mit der abgetrennten flüssigen Phase der Schwermetallabscheidung im Prozessschritt d) zugeführt werden. Deshalb wird in einer bevorzugten Ausführungsform der Erfindung die Rohstoffdispersion vor der Abtrennung so eingestellt, dass der Feststoffanteil weniger als 50 %, besonders bevorzugt weniger 30 % und ganz besonders bevorzugt weniger 10 % beträgt. Die Einstellung dieses bevorzugten Feststoffanteils kann vor, während und/oder nach der Reaktion zwischen dem mindestens einem anorganischem Sekundärphosphat und dem mindestens einem Reaktionsmittel erfolgen. Der Begriff "Feststoffgehalt" beziehungsweise der Begriff "Feststoffanteil" stellt im Sinne der Erfindung den prozentualen Anteil an Düngemittel dar, der sich aus der Rohstoffdispersion bildet. Die Begriffe werden im Sinne der Erfindung synonym verwendet und umfassen den unlöslichen Anteil und die gelösten Nährstoffe, die in das Düngemittelgranulat überführt werden.

Die teilweise Abtrennung der flüssigen Phase im Sinne der vorliegenden Erfindung kann kontinuierlich und/oder diskontinuierlich in einem oder mehreren Schrittenerfolgen, beispielsweise durch Filtrieren oder Zentrifugieren. Die Filtration kann diskontinuierlich zum Beispiel mittels Autopress, Drucknutschen, Rührdrucknutschen, Saugnutschen, Tellerfilter, (Druck)Blattfilter, Beutelfilter, Kerzenfilter, Schlauchfilter, Schichtenfilter, Filterpressen, wie z.B. Rahmenfilterpressen, Kammerfilterpressen, Membranfilterpressen; Plattenfilter und/oder Schüttungsfilter oder kontinuierlich, zum Beispiel mittels Crossflow-Filtration, Scherspaltfilter, Tubular-Rotorfilter, Bandfilter, Druckdrehfilter, Trommelfilter, Vakuumdrehfilter, Scheibendruckfilter und/oder Schiebbandpresse erfolgen, ohne darauf beschränkt zu sein. Das Zentrifugieren kann kontinuierlich durch zum Beispiel Siebzentrifugen, Siebschneckenzentrifungen, Prallringzentrifungen, Gleitzentrifugen, Schubzentrifugen, Schwingzentrifungen, Taumelzentrifugen und/oder Vollmantelzentrifugen oder diskontinuierlich zum Beispiel durch Hängependelzentrifugen, Horizontalschälzentrifungen, Stülpfilterzentrifungen, Schubbeutelzentrifungen und/oder Vertikalzentrifugen erfolgen. Es ist im Sinne der Erfindung bevorzugt, dass die Fest-Flüssigtrennung mittels Filterpressen oder Vakuumbandfilter durchgeführt wird.

Vor oder bei der teilweisen Abtrennung der flüssigen Phase kann die Rohstoffdispersion konditioniert werden, um beispielsweise eine Filtration oder Sedimentation zu verbessern oder zu vereinfachen. Beispielsweise können Flockungsmittel oder Mittel zur Einstellung der Viskosität zugegeben werden. Bei einer solchen möglichen Konditionierung ist es insbesondere für den Fall einer gewünschten Schwermetallabtrennung bevorzugt, dass der überwiegende Anteil der gelösten Schwermetalle auch gelöst bleibt. Werden die gelösten Schwermetalle beispielsweise- bevorzugt teilweise, ausgefällt, können diese vorzugsweise mit dem Feststoff abgetrennt werden und gelangen somit vorteilhafterweise nicht zum Prozessschritt d) mit der teilweisen Schwermetallabscheidung.

Bei der teilweisen Abtrennung der flüssigen Phase ist es vorzugsweise nicht zwingend erforderlich, dass alle festen Bestandteile aus der abgetrennten flüssigen Phase vollständig abgetrennt werden. Insbesondere sehr feine feste Partikel, die im Sinne der Erfindung vorzugsweise als Schwebpartikel bezeichnet werden, können vorzugsweise in der abgetrennten Phase verbleiben. Dies vereinfacht zum einen den Abtrennprozess, beispielsweise bei Filtration oder Zentrifugation, da insbesondere die vollständige Abtrennung von feinen Partikeln bei einer Fest-Flüssig-Trennung mit hoher Feststoffbeladung sehr aufwendig ist. Zum anderen können diese feinen Partikel bzw. Schwebpartikel, im Prozessschritt d) bei der optionalen zumindest teilweisen Abtrennung der Schwermetalle vorteilhaft genutzt werden, zum Beispiel als Keim- bzw. Kristallisationsbildner. Gelangt jedoch ein zu hoher Anteil an ungelösten Feststoffen in die abgetrennte flüssige Phase und damit in den Prozessschritt d), kann dies dann auch nachteilig sein, beispielsweise dann, wenn diese eingetragenen Feststoffe im Prozessschritt d) mit den Schwermetallen abgetrennt werden. Hohe Anteile an Feststoffen erhöhen dann dabei den verbleibenden schwermetallhaltigen Reststoff. Bevorzugt wird deshalb, dass in der abgetrennten flüssigen Phase ein Feststoffgehalt von kleiner als 10 %, besonders bevorzugt kleiner als 5 % und ganz besonders bevorzugt kleiner als 2 % eingestellt wird.

Im Prozessschritt c) des erfindungsgemäßen Verfahrens erfolgt die Erzeugung der Düngergranulate.

Es ist im Sinne der Erfindung bevorzugt, dass der Rohstoffdispersion aus Prozessschritt b) mit teilweiser abgetrennter flüssiger Phase nach Prozessschritt b) weitere Komponenten zugegeben werden können. Durch die gezielte Einstellung der Art und der Zusammensetzung der Rohstoffdispersion sowie der Art und der Intensität des Mischens kann vorteilhafterweise Einfluss auf die noch weiter ablaufende Reaktion und somit auf die Neutralammoniumcitratlöslichkeit des Phosphates, aber auch auf weitere Düngereigenschaften genommen werden.

Eine Zuführung von weiteren Komponenten kann beispielsweise bei der Überführung der Rohstoffdispersion von Prozessschritt b) in Prozessschritt c) oder in einem Mischgerät erfolgen. Das Mischgerät kann beispielsweise ein Mischbehälter mit Rührwerk, Wälzmischer, der vorzugsweise auch als Fall-, Trommel- oder Rotationsmischer bezeichnet wird, Schermischer, Zwangsmischer, Pflugscharmischer, Planeten-Mischkneter, Z-Kneter, Sigma-Kneter, Fluidmischer oder Intensivmischer sein. Die Auswahl des geeigneten Mischers hängt insbesondere von der Rieselfähigkeit und von den Kohäsionskräften des Mischgutes ab. Werden keine weiteren Komponenten zugeführt, kann dennoch eine Mischung der aus Prozessschritt b) überführten Rohstoffdispersion erfolgen, beispielsweise zur weiteren Homogenisierung oder zur Verhinderung Agglomerations- und/oder Aggregationsbildung.

Die Granulierung bzw. Extrusion kann vorzugsweise während des Zumischens weitere Komponenten und/oder daran anschließend erfolgen, beispielsweise im gleichen Mischgerät oder in einer separaten Granulier- bzw. Extrusionseinheit, die beispielsweise von Pelletier- oder Granuliertellern, Granuliertrommel, Wirbelschichtgranulierer, Sprühgranulierer oder Extruder gebildet wird.

Es ist im Sinne der Erfindung bevorzugt, dass der Anteil der im Prozessschritt b) nicht-abgetrennten und damit beim Feststoff verbleibenden flüssigen Phase in diesem Prozessschritt erheblichen Einfluss auf die ablaufenden Reaktionen, die Art der Granulation, die Produktqualität und/oder die Wirtschaftlichkeit des Verfahrens hat. Der Gesamtanteil der flüssigen Phase vor der Granulation und/oder Extrusion kann dabei beispielsweise über die Prozessführung im Prozessschritt b) und die Art und Menge der nach Prozessschritt b) zugeführten flüssigen, feuchten oder trockenen Komponenten eingestellt werden. Auch kann bei Bedarf eine teilweise Trocknung vor der Granulation erfolgen, um beispielsweise den Gesamtanteil der flüssigen Phase vor der Granulation und/oder Extrusion einzustellen.

In einer bevorzugten Ausführungsform der Erfindung ist oder wird die Rohstoffdispersion im Prozessschritt c) bzw. der feuchte Feststoff so eingestellt, dass sie eine Feuchte von kleiner als 30 %, bevorzugt kleiner als 25 % und besonders bevorzugt kleiner als 20 % enthält. Die bevorzugt erdfeuchte Mischung kann vorzugsweise direkt granuliert und/oder extrudiert werden. Zudem können verhältnismäßig kostengünstige Granulier- und/oder Extrusionsverfahren bzw. -technologien, wie beispielsweise Wälzmischer, Schermischer, Pflugscharmischer, Planeten-Mischkneter, Intensivmischer und/oder Extrusionsverfahren verwendet werden. Die zur Granulation erforderliche Klebeneigung kann bevorzugt auch durch unterschiedliche Stoffe, wie beispielsweise Bindemittel eingestellt werden. Diese können beispielsweise zusätzlich zugeführt werden. Vorteil dieser bevorzugten Ausführungsform der Erfindung ist es, dass eine gute Rundheit der Granulatkörner in dem bevorzugten Granulatgrößenbereich erzielt wird und die Granuliertechnologie und die Prozesskosten günstig anzuwenden sind.

So werden beispielsweise in einer besonders bevorzugten Ausführungsform der Erfindung die abgetrennte Rohstoffdispersion aus Prozessschritt b) mit gegebenenfalls weiteren Komponenten in einen Intensivmischer, zum Beispiel einem Intensivmischer Typ R Fa. Eirich, gegeben, wobei der Flüssigphasenanteil vorzugsweise so eingestellt und gegebenenfalls Bindemittel so zugegeben wird, dass durch die intensive mechanische Mischung ein Grüngranulat mit einer gewünschten Korngröße, bevorzugt in einem Bereich von 1 bis 10 mm, besonders bevorzugt von 2 bis 5 mm resultiert. Es ist im Sinne der Erfindung bevorzugt, dass Grüngranulat mindestens alle Komponenten des Düngegranulats umfasst, wobei das Grüngranulat vorzugsweise einen Flüssigphasenanteil, der im Sinne der Erfindung beispielsweise auch als "Feuchte" bezeichnet wird, wobei dieser Flüssigphasenanteil vorzugsweise durch eine Trocknung entfernt werden kann.

In einer ebenfalls besonders bevorzugten Ausführungsform der Erfindung erfolgt die Granulation auf einem Pelletier- bzw. Granulierteller. Dazu werden die abgetrennte Rohstoffdispersion aus Prozessschritt b), gegebenenfalls mit weiteren Komponenten, die der Rohstoffdispersion vor und/oder auf dem Pelletier- bzw. Granulierteller zugegeben werden können, dem Pelletier- bzw. Granulierteller zugeführt. Es ist im Sinne der Erfindung bevorzugt, dass eine flüssige Komponente, vorzugsweise in Kombination mit einem darin befindlichen oder separat zugeführten Bindemittel, auf die Rohstoffdispersion auf dem Granulierteller aufgesprüht wird. In einer bevorzugten Form der Erfindung ist die flüssige Komponente Wasser. Durch die Zugabe der flüssigen Komponente und durch die Drehbewegung des Pelletier- bzw. Granuliertellers formen sich vorteilhafterweise die Grüngranulate, die bei und/oder nach der Granulation zur Ausbildung der Düngergranulate getrocknet werden können. Vorteil dieser Ausführungsform der Erfindung ist es, dass die Granulation und die notwendige Technologie besonders kostengünstig sind. Zudem ist diese einfache Granulationstechnologie wenig reparaturanfällig.

In einer anderen ebenfalls bevorzugten Ausführungsform der Erfindung ist oder wird die Rohstoffdispersion im Prozessschritt c) so eingestellt, dass der Anteil der flüssigen Phase größer als 25 %, bevorzugt größer als 35 % ist.

In einer besonders bevorzugten Ausführungsform der Erfindung erfolgt die Granulierung in einem Wirbelschicht- oder Strahlschichtreaktor, besonders bevorzugt durch Sprühgranulation oder Sprühagglomeration. Solche Apparate sind dem Fachmann bekannt und werden beispielsweise durch Fa. Glatt mit der AGT- oder GF-Serie angeboten. Dazu wird die in Prozessschritt b) abgetrennte Rohstoffdispersion einschließlich der gegebenenfalls zusätzlichen Komponenten einem Wirbelschichtreaktor zugeführt. Bei den zusätzlichen Komponenten kann es sich beispielsweise um nährstoffhaltige Komponenten, Dispergier- und Entschäumungsmittel, Mittel zur pH-Werteinstellung und/oder Wasser handeln, die einzeln oder in Kombination zugeführt werden können. In einer besonders bevorzugten Ausführungsform der Erfindung erfolgt die Zuführung durch Einsprühen, beispielsweise durch Einsprühen über Düsen. Dazu ist es im Sinne der Erfindung bevorzugt, dass die Rohstoffdispersion pump- und sprühfähig ist. Dies kann vorzugsweise dadurch erreicht werden, dass beispielsweise der Anteil an flüssiger Phase ausreichend hoch ist, beispielsweise dadurch, dass entsprechend notwendige Mengen an bevorzugt Wasser zugeführt werden. Hohe Mengen an flüssiger Phase begünstigen vorzugsweise die Stabilität und die Pumpfähigkeit der Rohstoffdispersion und vereinfachen damit den technischen Betrieb. Diese positiven Effekte sind insbesondere auf eine geringere Neigung zur Ausfällung, Kristallisation und/oder Gelbildung zurückzuführen, ohne darauf beschränkt zu sein. Da die zu erzeugenden Düngergranulate jedoch einen geringen Anteil an Flüssigphase bzw. eine Feuchte aufweisen sollen, die bevorzugt kleiner als 5 %, besonders bevorzugt kleiner als 2 % ist, ist es im Sinne der Erfindung bevorzugt, dass die flüssige Phase beispielsweise bei der Granulation in dieser Ausführungsform entfernt wird. Besonders bevorzugt ist deshalb die Einstellung der flüssigen Phase in der Rohstoffdispersion in der Höhe, dass sich aus der Rohstoffdispersion 40 - 70 % Düngergranulat ganz besonders bevorzugt 45 - 60 % bilden. Eine Bildung von 40 - 70 % Düngergranulat aus der Rohstoffdispersion entspricht im Kontext der vorliegenden Erfindung einem Feststoffanteil in einem Bereich von 40 bis 70 % bzw. zwischen 40 und 70 %. Bei einem solchen Anteil von flüssiger Phase kann eine Rohstoffdispersion vorteilhafterweise ausreichend stabil und pumpfähig eingestellt werden, wobei der energetische Aufwand zur Abtrennung der flüssigen Phase als akzeptabel zu bewerten ist, insbesondere im Vergleich zu konventionellen Verfahren, die aus dem Stand der Technik bekannt sind. Die Herstellung der Rohstoffdispersion kann in einem Rührbehälter oder Mischer erfolgen. Vorteil dieser bevorzugten Ausführungsform zur Granulation ist es, dass die Granulatgröße besonders gut einstellbar ist, die Granulate sehr homogen sind sowie eine besonders runde und kompakte Granulatform erzielt wird. Die erhaltenen Granulate lassen sich insbesondere gut handhaben und besonders einfach auf Felder zum Beispiel mit Streuvorrichtungen ausbringen. Durch die Kompaktheit der Granulatkörner entsteht wenig Staub und Abrieb, was ebenfalls für das Ausbringen durch zum Beispiel Streuvorrichtungen vorteilhaft ist.

Es ist im Sinne der Erfindung bevorzugt, dass Düngergranulate eine geringe Feuchtigkeit, d.h. physikalisch gebundenes Wasser, aufweisen. Insbesondere ist es bevorzugt, dass eine Feuchtigkeit in einem Bereich von kleiner als 5 %, bevorzugt kleiner als 2 % liegt. Je nach Art der Granulation kann ein solcher Feuchtigkeitsbereich bereits bei der Granulation erzielt werden, insbesondere bei der Sprühagglomeration bzw. -granulation bei der die Granulation und/oder Trocknung weitgehend gleichzeitig ablaufen.

Es kann im Sinne der Erfindung bevorzugt sein, dass die erzeugten Granulate nach der Granulation und/oder Extrusion getrocknet oder zumindest zusätzlich nachgetrocknet werden. Dafür stehen unterschiedliche Trocknungstechnologien zur Verfügung, so beispielsweise Kontakttrockner, bei denen die zur Trocknung notwendige thermische Energie vorzugsweise durch den Kontakt mit Heizflächen zugeführt wird, konvektive Trockner, bei denen die zur Trocknung notwendige thermische Energie vorzugsweise durch den Kontakt mit Heißgas zugeführt wird oder Strahlungstrockner, bei denen die zur Trocknung notwendige thermische Energie vorzugsweise durch eine Strahlung mit einer definierten Frequenz zugeführt wird. Durch die Trocknung wird die vorhandene flüssige Phase, zum Beispiel das Wasser, im erforderlichen Maße abgetrennt. Vorzugsweise erfolgt durch die Trocknung auch ein Festigkeitsanstieg der Granulate, zum Beispiel indem sich bindende Phasen durch die Trocknung bilden oder beispielsweise indem ein Bindemittel dadurch seine Bindewirkung ausbildet.

In einer vorteilhaften Ausführungsform der Erfindung erfolgt die Trocknung durch Eigenwärme der erzeugten Granulate oder wird dadurch zumindest unterstützt. Die Eigenwärme erhalten die Granulate vorzugsweise durch Erwärmen. Beispielsweise kann eine Erwärmung der Granulate prozessbedingt durch den Granulations- und/oder Extrusionsprozess oder durch chemische Reaktion erfolgen. Wenn die Erwärmung der Granulate durch den Granulations- und/oder Extrusionsprozess erfolgt, ist es im Sinne der Erfindung bevorzugt, dass die Erwärmung durch Eintrag mechanischer Energie erfolgt, wobei die mechanische Energie vorzugsweise in Wärmeenergie umgewandelt wird. So liefern beispielsweise die Reaktion zwischen CaO und Säure und/oder Wasser oder die Reaktion zwischen Schwefelsäure und Wasser, insbesondere beim Verdünnen, exotherme Energie, die vorzugsweise zum Erwärmen der Rohstoffdispersion und/oder der geformten Granulate genutzt werden kann.

Werden Kristallisationsprodukte aus der Phosphorelimination, wie Struvit, Brushit und/oder hydroxyxlapatitähnliche Ca-P-Phase, der Rohstoffmischung zugeführt und sind folglich im erzeugten Granulat bzw. Grüngranulat enthalten, ist es im Sinne der Erfindung bevorzugt, dass die Trocknung in einer bevorzugten Ausführungsform der Erfindung oberhalb von 100°C bezogen auf die Materialtemperatur bei der Trocknung erfolgt. Diese Kristallisationsprodukte enthalten vorzugsweise einen großen Anteil chemisch gebundenen Wassers, wobei es sich dabei vorzugsweise nicht um "Feuchte" im Sinne der Erfindung handelt, sondern um Wasser, das in der Kristallstruktur eingebunden vorliegt.

Im Bereich oberhalb von 100 °C wird dieses chemisch gebundene Wasser vorzugsweise abgespaltet. Durch das Abtrennen des Wassers aus dem Granulat erhöht sich vorteilhafterweise der prozentuale Anteil der verbleibenden Komponenten. So kann beispielsweise die Konzentration an Nährstoffen im Granulat erhöht werden, die zuvor durch das chemisch gebundene Wasser quasi entsprechend verdünnt vorlag. In einer besonders bevorzugten Ausführungsform der Erfindung erfolgt die Trocknung, wenn Kristallisationsprodukte aus der Phosphorelimination enthalten sind in einem Bereich 100-140°C bezogen auf die Materialtemperatur bei der Trocknung. Es ist im Sinne der Erfindung somit ganz besonders bevorzugt, dass die Trocknung in einem Temperaturbereich zwischen 100 und 140 °C erfolgt. Oberhalb von 140°C besteht die Gefahr, dass zunehmend Stickstoff abgespalten wird. Damit ist ein unerwünschter Stickstoffverlust aus dem Granulat verbunden. Darüber hinaus muss die Abluft entsprechend aufwendiger gereinigt werden. Durch die Begrenzung auf eine Temperatur von max. 140 °C in dieser bevorzugten Ausführungsform der Erfindung können diese Nachteile weitgehend vermieden werden. In einer ganz besonderen Ausführungsform der Erfindung erfolgt die Trocknung in einem Temperaturbereich zwischen 120°C und 140°C.

Es ist im Sinne der Erfindung bevorzugt, dass das Düngergranulat möglichst formgenau hergestellt werden kann. Eine möglichst gleichmäßige Größe der Granulatkörner stellt vorteilhafterweise definierte, gleichmäßige Zerfallseigenschaften sicher, was für eine gezielte Nährstoffzuführung notwendig ist. Da zudem das Vorliegen von Überkorn und Unterkorn die maschinelle Ausbringung des Düngemittels beeinträchtigen kann, ist es im Sinne der Erfindung bevorzugt, dass Über- und Unterkorn von dem Gutkorn getrennt und gegebenenfalls dem Produktionsprozess, insbesondere dem Misch- und/oder Granulierprozess, gegebenenfalls mit vorheriger Aufbereitung und/oder Aufmahlung, rückgeführt werden kann. Der Begriff "Gutkorn" beschreibt im Sinne der Erfindung bevorzugt ein Granulat in einem gewünschten Größenbereich für die Granulatkörner. Die Begriffe "Überkorn" und "Unterkorn" beschreiben im Sinne der Erfindung vorzugsweise solche Granulatkörner, die - vorzugsweise deutlich - größere bzw. kleine Durchmesser als das Gutkorn aufweisen.

Darüber hinaus ist es im Sinne der Erfindung bevorzugt, dass das Granulat eine gute Bindung innerhalb des Granulats aufweist, um auch nach längerer Lagerung Staubverluste beim Ausbringen des Düngemittels zu vermeiden. Die Festigkeit der Granulate kann beispielsweise über die Prozessführung eingestellt werden. So hat beispielsweise die Trocknungsgeschwindigkeit Einfluss auf die Porosität und Kompaktheit und damit auf die Festigkeit der Granulate und kann darüber beeinflusst werden. Die Festigkeit kann auch beispielsweise über die Art und Feinheit der Rohstoffkomponenten beeinflusst oder durch die Zugabe von Bindemittel erhöht werden.

Die erfindungsgemäß erzeugten Düngegranulate können eine oder mehrere Beschichtungen zur Funktionalisierung (z.B. Reduzierung der Verklumpungsneigung, Erhöhung der Festigkeit), zum Schutz (z.B. vor Feuchtigkeit) und/oder zur gesteuerten Nährstofffreistellung (Beeinflussung der Löslichkeit durch das Coating) erhalten. Zur Beschichtung sind dem Fachmann zahlreiche Verfahren und Technologien bekannt, wobei hier alle Verfahren und Technologien geeignet sind, die eine gewünschte Beschichtung mit der gewünschten Funktionalität erzeugen.

Im Prozessschritt d) des vorgeschlagenen Verfahrens erfolgt die Rückführung der im Prozessschritt b) zumindest teilweise abgetrennten flüssigen Phase in den Prozessschritt a) zur Herstellung einer Rohstoffdispersion oder c) zur Granulation, wobei optional eine zumindest teilweise Schwermetallabtrennung erfolgen kann. Ob und inwieweit Schwermetalle abgeschieden werden müssen, hängt dabei beispielsweise von der Schwermetallbelastung der eingesetzten Rohstoffe, den rechtlichen Vorgaben und vom gewünschten Nachhaltigkeitsanspruch der erzeugten Produkte ab.

Vor der möglichen Schwermetallabtrennung kann entweder die Rohstoffdispersion im Prozessschritt a) bzw. b) und/oder die abgetrennte flüssige Phase konditioniert werden. Eine solche Konditionierung kann dabei insbesondere diejenigen Maßnahmen umfassen, die die Schwermetallabtrennung im Prozessschritt d) ermöglichen, verbessern und/oder begünstigen, beispielsweise eine gezielte Einstellung des pH-Werts, das Ausfällen oder Abtrennen von störenden Begleit- und/oder Nährstoffelementen oder Einstellen einer definierten Konzentration, Viskosität und/oder Temperatur.

Zur möglichen Abtrennung der Schwermetallionen aus der teilweise abgetrennten flüssigen Phase stehen unterschiedliche Verfahren zur Verfügung, beispielsweise mittels eines Ionenaustauschers, Flüssig-flüssig-Abtrennung, Aktivkohle, Bakterien, Pilzen, Algen, einer Biomasse aus Bakterien, Pilzen oder Algen, eines Fällungsmittels, durch Nanofilters und/oder elektrolytisch. Je nach Zusammensetzung und Konditionierung der flüssigen Phase sind die Verfahren zur Schwermetallabtrennung unterschiedlich geeignet und werden vorzugsweise entsprechend danach ausgewählt. Das eingesetzte Verfahren wird auch danach ausgewählt, welche Sorte von Schwermetallen in welcher Konzentration abgetrennt werden soll. Dies kann zum Beispiel daran bemessen werden, welche unerwünschten Schwermetallsorten im anorganischen Sekundärphosphat vorhanden sind und wie viel davon abgetrennt werden soll. Auch müssen die ausgewählten Schwermetalle nicht vollständig abgetrennt werden, gegebenenfalls ist eine teilweise Abtrennung ausreichend, um die gewünschte Schwermetallkonzentration im erzeugten Düngergranulat, beispielsweise unterhalb der Grenzwerte der gültigen Düngemittelverordnung, zu erhalten.

Die Art der möglichen Schwermetallabscheidung wird auch danach ausgewählt, ob und wenn ja welche, weiteren gelösten Komponenten die flüssige Phase neben den Schwermetallen enthält. So kann die abgetrennte flüssige Phase aus Prozessschritt b) neben den gelösten Schwermetallen weitere gelöste Stoffe, zum Beispiel einen erheblichen Anteil an Phosphat, der beispielsweise ebenfalls durch das Reaktionsmittel aus dem anorganischen Sekundärphosphat gelöst wurde, enthalten. In diesem Fall ist es im Sinne der Erfindung bevorzugt, dass die Schwermetallabscheidung bevorzugt selektiv erfolgt. Das heißt im Sinne der Erfindung bevorzugt, dass die abzutrennenden Schwermetalle insbesondere selektiv durch das angewendete Trennungsverfahren abgesondert werden. Die auch darin enthaltenen gelösten Komponenten, zum Beispiel enthaltenen Nährstoffen wie Phosphat, sollen im Wesentlichen vollständig in der flüssigen Phase bis nach der Schwermetallabtrennung verbleiben. Vorteilhaft ist deshalb, wenn der pH-Wert für diesen Fall im Prozessschritt b) und bei der Schwermetallabtrennung kleiner als 1,8 ist, da auf diese Weise sichergestellt wird, dass die gelösten Schwermetalle und/oder die Nährstoffe in Lösung bleiben. Alternativ können vor der Schwermetallabtrennung Komplexbildner in der Form zugesetzt werden, dass ein Ausfällen des Phosphates in einem Bereich des pH-Werts von größer als 1,8 weitgehend unterbunden wird.

Die bevorzugte selektive zumindest teilweise Abtrennung der Schwermetalle aus nährstoffhaltigen, stark sauren Lösungen kann in einer bevorzugten Ausführungsform der Erfindung mittels lonentauscher erfolgen. Ionentauscher oder Ionenaustauscher sind im Sinne der Erfindung vorzugsweise solche Materialien, mit denen gelöste Ionen gegen andere Ionen der gleichen Art ersetzt werden können. Dazu werden die lonentauscher vorzugsweise von der im Prozessschritt b) abgetrennten flüssigen Phase ein oder mehrfach durchströmt, zum Beispiel in Säulen, die mit einem lonenaustauschermaterial gefüllt sind, oder als Membranen. Die auszutauschenden Ionen werden bevorzugt am lonenaustauschermaterial gebunden, das seinerseits dafür eine äquivalente Stoffmenge von vorher gebundenen Ionen in die Lösung abgibt. Wenn der Ionenaustauscher erschöpft und im Wesentlichen vollständig abgesättigt ist, kann er beispielsweise regeneriert werden. Es ist im Sinne der Erfindung bevorzugt, dass lonentauscher für saure Arbeitsbereiche ausgewählt werden. Zudem ist es bevorzugt, dass die Ionenaustauscher dazu eingerichtet sind, die störenden Schwermetalle möglichst selektiv herauslösen, nicht jedoch das Phosphat. Auch sollen die lonentauscher möglichst keine anderen Kationen, wie Alkali- oder Erdalkalimetalle, abtrennen, da sich sonst die Standzeit deutlich verringert. Durch gezielte Auswahl der Art und Menge an lonentauscher, der Prozessführung und Einstellung bzw. Konditionierung) der abgetrennten Lösung können Schwermetalle besonders effektiv entfernt werden.

In einer anderen bevorzugten Ausführungsform zur weitgehend selektiven Schwermetallabtrennung wird der abgetrennten flüssigen Phase ein Opfermetall zugegeben. Als Opfermetall wird im Sinne der Erfindung bevorzugt ein unedleres Metall als die abzutrennenden Schwermetalle bezeichnet, beispielsweise ausgewählt aus der Gruppe von Aluminium, Eisen und Zink oder Mischungen daraus. Tritt das Opfermetall mit den gelösten Schwermetallen in Kontakt, findet vorteilhafterweise eine Reduktion der gelöst vorliegenden edleren Metalle auf der Oberfläche des unedleren Opfermetalls statt, das dabei oxidiert wird. Die ablaufenden reduktiven Bedingungen können durch die Zugabe eines geeigneten Reduktionsmittels verstärkt werden. Das Opfermetall wird bevorzugt im stöchiometrischen Überschuss der 1 bis 5-fachen Stoffmenge der edleren abzutrennenden Schwermetalle zugegeben und die Reaktion mit dem Opfermetall dauert vorzugsweise 10 bis 60 Minuten. Das Opfermetall wird insbesondere der abgetrennten flüssigen Phase zugegeben und das metallisch abgeschiedene Schwermetallgemisch aus beispielsweise Cadmium, Kupfer und/oder Blei anschließend kann zum Beispiel durch Filtration abgetrennt werden.

In einer anderen bevorzugten Ausführungsform der Erfindung erfolgt die selektive Schwermetallabtrennung durch Hydroxidfällung durch eine pH-Wert-Anhebung. In dieser Ausführungsform ist es bevorzugt, dass durch Komplexbildner das Ausfallen des Phosphates in den eingestellten pH-Wertbereich verhindert wird. In einer anderen bevorzugten Ausführungsform der Erfindung erfolgt die selektive Schwermetallabtrennung durch Sulfidfällung durch Zuführen von beispielsweise H2S, CH4N2S, Na2S. Es ist im Sinne der Erfindung bevorzugt, dass dazu der pH-Wertbereich über 1,8 angehoben wird, wenn das Ausfällen des Phosphates durch Komplexbildner unterbunden wird.

Enthält die abgetrennte flüssige Phase aus Prozessschritt b) keine relevanten Nährstoffkomponenten mehr, insbesondere keine relevante Menge an gelöstem Phosphat, können auch andere Verfahren zur Schwermetallabtrennung verwendet werden. Je nach Art des Reaktionsmittels kann beispielsweise der größte Teil des durch das Reaktionsmittels gelösten Phosphates durch die Erhöhung des pH-Wertes in einen Bereich 1,5 bis 3,5, bevorzugt in dem Bereich 1,5 bis 3, besonders bevorzugt in dem Bereich 1,5 bis 2,5 beispielsweise als Aluminiumphosphat ausgefällt werden, wobei in den bevorzugten pH-Wertbereichen die relevanten Schwermetalle, wie zum Beispiel Blei, Cadmium, Nickel, Chrom oder Kupfer, weitgehend weiter gelöst vorliegen. Es sind insbesondere pH-Wertbereich zwischen 1,5 bis 3,5 bevorzugt, insbesondere zwischen 1,5 bis 3 und ganz besonders bevorzugt zwischen 1,5 und 2,5. Als Reaktionsmittel kann beispielsweise Salzsäure und/oder Salpetersäure verwendet werden. Die pH-Wert-Erhöhung in diesen Bereich kann dabei im Prozessschritt a) oder b) vor der teilweisen Abtrennung der flüssigen Phase erfolgen, zum Beispiel durch Zugabe von Laugen oder Hydroxiden. Dadurch enthält die im Prozessschritt b) teilweise abgetrennte flüssige Phase vorteilhafterweise deutlich weniger gelöstes Phosphat. Die verbleibenden Reste können ohne nennenswerte wirtschaftliche Verluste gemeinsam mit den Schwermetallen abgetrennt werden. Das vereinfacht die Schwermetallabtrennung deutlich. In diesem Fall können beispielsweise die Schwermetalle durch pH-Wert-Erhöhung zum Beispiel im Bereich 5 bis 7 ausgefällt und anschließend abgetrennt werden. Mit anderen Worten ist es bevorzugt, dass in diesem Fall eine pH-Wert-Erhöhung in einem Bereich zwischen 5 und 7 erfolgt.

Grundsätzlich kann die von den Schwermetallen teilweise gereinigte oder nicht-gereinigte flüssige Phase im Ganzen oder in Teilen entsorgt oder anderen Verwertungen zugeführt werden. Bevorzugt ist es im Sinne der Erfindung, dass die im Prozessschritt b) abgetrennte flüssige Phase zumindest teilweise dem Prozessschritt a) und/oder dem Prozessschritt c) zugeführt wird. Im Prozessschritt a) dient die flüssige Phase insbesondere der Einstellung des Feststoff-Flüssigkeits-Verhältnisses. Im Prozessschritt c) kann die flüssige Phase zur Granulation oder zur Einstellung der Rohstoffdispersion für die Granulation dienen.

In einer bevorzugten Ausführungsform der Erfindung wird die in Prozessschritt b) abgetrennte und von den Schwermetallen teilweise gereinigte oder nicht-gereinigte flüssigen Phase zumindest anteilig in Prozessschritt a) zurückgeführt. Dabei werden bereits vor oder bei der Rückführung in den Prozessschritt a) das oder die erforderlichen Reaktionsmittel zumindest teilweise der flüssigen Phase zugeführt und so die flüssige Phase gemeinsam mit zumindest dem anteiligen Reaktionsmittel in Prozessschritt a) übergeben. Sind das oder die Reaktionsmittel beispielsweise Säuren, kann durch die Zuführung des Reaktionsmittels vorteilhafterweise der pH-Wert gesenkt und damit eine Ausfällung oder Auskristallisation von gelösten Bestandteilen aus der flüssigen Phase bis zur Rückführung in Prozessschritt a) reduziert werden.

Die Erfindung wird anhand der nachfolgenden Ausführungsbeispiel näher beschrieben. Die Beispiele 1 und 2 zeigen dabei nicht erfindungsgemäße Beispiele, die die Mängel und Nachteile des Standes der Technik darstellen sollen. Die Ausführungsbeispiels 3 bis 6 zeigen Ausführungsbeispiele gemäß der vorliegenden Erfindung. Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden.

### Beispiel 1 (nicht erfindungsgemäß, zur Illustration des Standes der Technik):

In einem Pflugscharmischer mit Messersatz werden 100 kg Klärschlammasche (P2O5-Gehalt 21,0 %, davon neutral-ammoniumcitratlöslich 38 % und <1 % wasserlöslich; Schwermetallgehalte von 178 mg/kg Pb; 75 mg/kg Ni und 18,3 mg/kg Cd) und 110 kg Phosphorsäure (84 %) vermischt, wobei die Asche mit der Säure reagiert und das Gemisch zu Granulaten in einem definierten Kornbereich von 2,5 - 4 mm aufgearbeitet werden soll.

Dies gelingt jedoch nur mit erheblichen Schwierigkeiten. Problematisch ist dabei die heftig ablaufende Reaktion zwischen Asche und Säure, die zu Verkrustung, Ablagerungen und Verstopfungen führt. Die erzeugte Masse aus Asche und Säure ist sehr zäh und klebrig und damit sehr schlecht zu handhaben. Zudem greift das Säuregemisch den eingesetzten Mischer korrosiv an.

Das erzeugte Granulat weist eine inhomogene Kornverteilung in Klumpenform mit vergleichsweise geringer Festigkeit auf. Der P2O5-Gesamtgehalt liegt bei 46 %, wobei davon 82 % ammoniumcitratlöslich und 61 % wasserlöslich sind. Die Schwermetalle, eingetragen durch die Klärschlammasche, werden in diesem Beispiel nachteiligerweise nicht abgetrennt.

### Beispiel 2 (nicht erfindungsgemäß, zur Illustration des Standes der Technik):

In einem Mischbehälter werden 140 kg Wasser und 110 kg Phosphorsäure (85 %) vorgelegt und vermischt, dazu werden 100 kg Klärschlammasche (P2O5-Gehalt21,0 %, davon neutral-ammoniumcitratlöslich 38 % und <1 % wasserlöslich; Schwermetallgehalte von 178 mg/kg Pb; 75 mg/kg Ni und 18,3 mg/kg Cd) zugegeben und die so erzeugte Rohstoffdispersion gemischt. Der Feststoffgehalt der so erzeugten Rohstoffdispersion liegt bei ca. 55 %. Ein signifikant höherer Feststoffanteil ist im technischen Betrieb kaum realisierbar, da dadurch die Viskosität deutlich ansteigt, zum Teil auch erst im Verlauf der Reaktion zwischen Säure und Asche. Hohe Viskosität erschwert oder verhindert das Rühren, Fördern und Pumpen und birgt die Gefahr von Verstopfungen und Verkrustungen.

Nachdem die Komponenten zusammengeführt wurden, wird eine Inkubationszeit von 25 Minuten eingehalten, wobei in dieser Zeit weiter gerührt wird. Die Formulierung, dass die "Inkubationszeit eingehalten wird" bedeutet im Sinne der Erfindung bevorzugt, dass die Komponenten miteinander reagieren können, bevor ein neuer Verfahrensschritt eingeleitet wird bzw. bevor dem Gemisch neue Reaktionspartner zugeführt werden. Durch die einsetzende Reaktion zwischen Säure und Klärschlammasche erwärmt sich die Rohstoffdispersion auf ca. 40 °C. Durch die Einwirkung der Säure auf die Klärschlammasche und den sich einstellenden pH-Wert von ca. 0,5 sind nach der Inkubationszeit anteilig Phosphat, anteilig Schwermetalle und weitere Stoffe gelöst.

Die so erzeugte Rohstoffdispersion wird im Anschluss daran vollständig granuliert. Zur vollständigen Granulation einer Rohstoffdispersion mit einem Feststoffgehalt von 55% stehen nur wenige Granulationsverfahren zur Verfügung. Kostengünstige Verfahren, wie Granulation auf dem Granulierteller oder im Intensivmischer, sind aufgrund des hohen Anteils an flüssiger Phase nicht möglich. Möglich ist beispielsweise eine Sprühgranulation. Dazu wird in diesem Beispiel die erzeugte Rohstoffdispersion einer kontinuierlichen Wirbelschichtanlage zur Sprühgranulation zugeführt. Die Sprühgranulation wird dabei so gesteuert, dass eine mittlere Granulatgröße von 3,5 mm erhalten wird. Nach der Sprühgranulation werden Granulate mit einem Granulatkorndurchmesser von kleiner als 2 mm und Granulate mit einem Granulatkorndurchmesservon größer 5 mm durch Siebung abgetrennt und dem Sprühgranulationsprozess als Kernmaterial zugeführt, wobei die Granulate größer 5 mm zuvor aufgemahlen werden. Das erzeugte Granulat weist eine runde und kompakte Granulatform in einem Bereich zwischen 2 - 5 mm auf, einen P2O5-Gesamtgehalt von 46 %, wobei davon 92 % ammoniumcitratlöslich und 72 % wasserlöslich sind.

Vorteil dieser Ausführungsform gegenüber Beispiel 1 ist, dass die Reaktion zwischen Asche und Säure in der erzeugten Rohstoffdispersion abläuft und damit kontrollierbar ist. Die weitgehend abreagierte Rohstoffdispersion enthält kaum noch freie Säure, so dass bei der Weiterverarbeitung deutlich weniger Korrosionsprobleme auftreten.

Vorteile der Granulation mittels Sprühgranulation in diesem Beispiel sind, dass Rohstoffdispersionen mit hohen Flüssigphasenanteil granuliert werden können und sehr kompakte, abriebsfeste und sphärische Granulate gebildet werden.

Wesentlicher Nachteil ist jedoch, dass der Energieverbrauch durch Trocknung des hohen Flüssigphasenanteils, durch Erzeugung eines Wirbelbetts und durch die notwendige Verdüsungsenergie sehr hoch ist.

Ein weiterer Nachteil bei diesem Herstellungsverfahren ist, dass die Schwermetalle, welche beispielsweise in der Klärschlammasche enthalten sind, nicht abgetrennt werden, sondern vollständig in das Düngergranulat überführt werden. Im Beispiel 2 sind ca. 52 % der Komponenten der eingesetzten Klärschlammasche enthalten, weshalb sich eine Schwermetallkonzentration für Blei von 92 mg/kg, für Nickel 39 mg/kg und für Cadmium 10 mg/kg durch den Eintrag mit der Klärschlammasche im erzeugten Düngergranulat ergibt.

### Ausführungsbeispiel 3 (erfindungsgemäß):

Analog zu Beispiel 2 wird eine Rohstoffdispersion aus 140 kg Wasser, 110 kg Phosphorsäure (85 %) und 100 kg Klärschlammasche (P2O5-Gehalt 21,0 %, davon neutral-ammoniumcitratlöslich 38 % und <1 % wasserlöslich; Schwermetallgehalte von 178 mg/kg Pb; 75 mg/kg Ni und 18,3 mg/kg Cd) erzeugt und eine Inkubationszeit von 25 Minuten eingehalten.

Nach der Inkubationszeit wird die so erzeugte Rohstoffdispersion einer Fest-Flüssig-Trennung zugeführt. Mittels Filterpresse wird ein großer Teil der flüssigen Phase vom ungelösten Feststoff so abgetrennt, dass vorzugsweise ein erdfeuchtes Feststoffgemisch mit einer Feuchte von kleiner als 20 % gebildet wird.

Die abgetrennte und auch noch Nährstoffe enthaltende Lösungwird dem Prozess der Rohstoffdispersionsherstellung für den nächsten Ansatz zurückgeführt und ersetzt vorzugsweise in äquivalenter Menge den oben aufgeführten Wasseranteil in der Rezeptur der Rohstoffdispersion. Bei kontinuierlich fortlaufender Prozessführung stellt sich ein Gleichgewichtskreislauf der gelösten Stoffe in diesem Teilkreislauf ein. Entsprechend wird nach der Einstellung dieses Gleichgewichtes das Phosphat in der zugegebenen Menge durch die Klärschlammasche zur Granulation und damit wie gewünscht in das Granulat übergehen.

Das aus der Fest-Flüssig-Trennung resultierende erdfeuchte Feststoffgemisch wird in einen Intensivmischer (Fa. Eirich R16W) überführt und dort intensiv gemischt. Das Verhältnis von Feststoff zu flüssiger Phase wird im Intensivmischer durch Zugabe von Wasser oder einem Pulver (z.B. Klärschlammasche) vorzugsweise so eingestellt, dass sich beim intensiven Mischen Grüngranulate in der gewünschten Größe ausbilden. Die gebildeten Grüngranulate werden anschließend bei 110 °C getrocknet und in Granulatkörner mit Durchmessern in einem Bereich zwischen 2 und 5 mm fraktioniert. Die Fraktion von Granulatkörnern mit einem Durchmesser kleiner als 2 mm und die Fraktion von Granulatkörnern mit einem Durchmesser größer als 5 mm werden nach vorheriger Aufmahlung der Granulation zurückgeführt.

Das erzeugte Granulat weist nach der Einstellung der oben beschriebenen Gleichgewichtskreisläufe vorteilhafterweise eine runde und kompakte Granulatform im Bereich 2-5 mm auf, einen P2O5-Gesamtgehalt von 46 %, wobei davon 93 % ammoniumcitratlöslich und 61% wasserlöslich sind. Im erzeugten Düngergranulat sind ca. 52 % Komponenten der eingesetzten Klärschlammasche enthalten, weshalb sich eine Schwermetallkonzentration für Blei von 92 mg/kg, für Nickel 39 mg/kg und für Cadmium 10 mg/kg durch den Eintrag mit der Klärschlammasche im erzeugten Düngergranulat ergibt.

Vorteil dieser Ausführungsform gegenüber Beispiel 1 ist, dass die Reaktion zwischen Asche und Säure in der erzeugten Rohstoffdispersion abläuft, damit kontrollierbar ist und durch wenig freie Säure kaum Korrosionsprobleme auftreten.

Wesentlicher Vorteil gegenüber Beispiel 2 ist, dass ein Teil der flüssigen Phase aus der Rohstoffdispersion mechanisch abgetrennt wird. Damit muss wesentlich weniger Wasser verdampft werden, was erhebliche Energiekosten einspart und den Prozess damit deutlich wirtschaftlicher macht.

### Ausführungsbeispiel 4 (erfindungsgemäß):

Dieses Ausführungsbeispiel entspricht im Wesentlichen Ausführungsbeispiel 3 mit der folgenden Veränderung:
Die abgetrennte flüssige Phase aus der Fest-Flüssigabscheidung wird nicht direkt der erneuten Herstellung einer Rohstoffdispersion, sondern der teilweisen Schwermetallabscheidung zugeführt. Die teilweise Abtrennung der Schwermetalle erfolgt in dieser Ausführungsform der Erfindung mittels Ionenaustauscher bei einem pH-Wert der Lösung von ca. 0,5. Dazu wird die abgetrennte flüssige Phase einer Kolonne zugeführt, die beispielsweise das lonenaustauscherharz Lewatit MonoPlus TP220 umfasst. Die abgetrennte Flüssigkeit durchströmt den Behälter mit dem lonenaustauscherharz innerhalb von 30 Minuten, wobei das lonenaustauscherharz selektiv Ionen aus der Lösung aufnimmt. So werden insbesondere Cd, Cu, Pb und Zn mit jeweils mehr als 70% der enthaltenen Menge abgeschieden, wobei gelöstest Phosphat vorteilhafterweise nur im geringen Umfang abgetrennt wird. Ist der Ionenaustauscher beladen, kann er vorteilhafterweise regeneriert und die dabei entstehende schwermetallhaltige Regenerationslösung aufbereitet oder entsorgt werden.

Die so gereinigte schwermetallarme, jedoch weiterhin nährstoffhaltige Lösung wird erst anschließend dem Prozess der Rohstoffdispersionsherstellung für den nächsten Ansatz zurückgeführt und ersetzt vorzugsweise in äquivalenter Menge den oben aufgeführten Wasseranteil in der Rezeptur der Rohstoffdispersion analog zu Ausführungsbeispiel 3.

Durch diese mögliche Änderung im Verfahrensablauf weisen die erzeugten Granulate nach der Einstellung der oben beschriebenen Gleichgewichtskreisläufe ebenfalls eine runde und kompakte Granulatform mit Granulatkörnern mit einem Durchmesser in einem Bereich 2-5 mm auf, einen P2O5-Gesamtgehalt von 46 %, wobei davon 93 % ammoniumcitratlöslich und 61% wasserlöslich sind, auf, jedoch werden Schwermetalle vorteilhaftweise teilweise abgetrennt. Im erzeugten Düngergranulat werden entsprechend weniger Schwermetalle (50 mg/kg Blei, für 24 mg/kg Nickel und für Cadmium 6 mg/kg) detektiert.

Ausführungsbeispiel 4 weist die gleichen Vorteile wie Ausführungsbeispiel 3 auf. Zusätzlicher Vorteil ist, dass hier ein Teil der Schwermetalle abgetrennt wird und damit der Schwermetallgehalt im erzeugten Düngemittel vorteilhafterweise reduziert werden kann.

### Ausführungsbeispiel 5 (erfindungsgemäß):

In einem Mischbehälter werden 200 kg Wasser und 40 kg Salpetersäure (65 %) als Reaktionsmittel vorgelegt und vermischt, dazu werden 100 kg Klärschlammasche als anorganisches Sekundärphosphat (P2O5-Gehalt 21,0 %, davon neutral-ammoniumcitratlöslich 38 % und <1 % wasserlöslich; Schwermetallgehalte von 178 mg/kg Pb; 75 mg/kg Ni und 18,3 mg/kg Cd) zugegeben und die so erzeugte Rohstoffdispersion gemischt. Nachdem die Komponenten zusammengeführt wurden, wird eine Inkubationszeit von 25 Minuten eingehalten, wobei in dieser Zeit weiter gerührt wird. Durch die einsetzende Reaktion zwischen Reaktionsmittel und Sekundärphosphat erwärmt sich die Rohstoffdispersion auf ca. 40 °C. Durch die Einwirkung des Reaktionsmittels auf die Klärschlammasche und den sich einstellenden pH-Wert von ca. 0,5 sind nach der Inkubationszeit anteilig Phosphat, anteilig Schwermetalle und weitere Stoffe gelöst.

Nach der Inkubationszeit werden der Rohstoffdispersion 500 kg der von den Schwermetallen zumindest teilweise gereinigten, jedoch weiterhin nährstoffhaltigen flüssigen Phase aus dem Prozessschritt der Schwermetallabtrennung zugeführt. Da diese flüssige Phase zu Verfahrensstart nicht vorliegt, kann vorzugsweise zunächst eine Lösung aus Wasser und Salpetersäure mit einem pH-Wert von ca. 0,5 verwendet werden. Durch das Zuführen der flüssigen Phase werden die gelösten Schwermetalle verdünnt, wobei die Schwermetalle vorzugsweise aber weitgehend gelöst vorliegen bleiben. Diese so verdünnte Rohstoffdispersion wird einem Filter zugeführt und dort werden 500 kg flüssige Phase von der Rohstoffdispersion abgetrennt. In dem entleerten Mischbehälter kann eine neue Mischung analog der obigen Beschreibung für einen fortlaufenden Prozess beginnen.

Die abgetrennte flüssige Phase wird der teilweisen Schwermetallabscheidung zugeführt. Die teilweise Abtrennung der Schwermetalle erfolgt durch die Zugabe eines Opfermetalls. Dazu wird den 500 kg abgetrennter flüssiger Phase in einem Mischbehälter 5 kg feines Aluminiumpulver zugegeben und intensive gemischt. Nach 30 Minuten Einwirkzeit unter ständigem Rühren werden die festen Partikel aus der flüssigen Phase abgefiltert. Es ist im Sinne der Erfindung bevorzugt, die Begriffe "Einwirkzeit" und "Inkubationszeit" synonym zu verwenden.

Die so gereinigte schwermetallarme, jedoch weiterhin nährstoffhaltige Lösung wird der Rohstoffdispersion nach der Inkubationszeit zugeführt. Eventuelle Flüssigkeitsverluste werden dabei beispielsweise durch Wasser ausgeglichen. Dies dient der Verdünnung der gelösten Schwermetalle, aber auch der Rückführung der gelösten Nährstoffe. Bei kontinuierlich fortlaufender Prozessführung stellt sich ein Gleichgewichtskreislauf der gelösten Nährstoffe in diesem Teilkreislauf der Schwermetallabtrennung ein.

Die aus der oben beschriebenen Abtrennung der flüssigen Phase verbleibendende Rohstoffdispersion mit reduzierter flüssiger Phase wird in einem Vorlagebehälter gepumpt und dort zunächst weiter gerührt. Dazu werden unter Rühren 120 kg Monoammoniumphosphat (59 % P2O5, 11,5 % N) zugegeben. Die Rohstoffdispersion wird einer kontinuierlichen Wirbelschichtanlage zur Sprühgranulation zugeführt. Die Sprühgranulation wird dabei so gesteuert, dass eine mittlere Granulatgröße von 3,5 mm erhalten wird. Nach der Sprühgranulation werden Granulate mit einem Granulatkorndurchmesser von kleiner als 2 mm und Granulate mit einem Granulatkorndurchmesservon größer als 5 mm durch Siebung abgetrennt und dem Sprühgranulationsprozess als Kernmaterial zugeführt, wobei die Granulate mit einem Granulatkorndurchmesser von größer als 5 mm zuvor aufgemahlen werden. Zur Sprühgranulation ist ein Kernmaterial in Form eines Wirbelbettes erforderlich, auf welches die Rohstoffdispersion aufgesprüht wird. In der Startphase wird dazu vorzugsweise arteigenes Kernmaterial vorgelegt, im kontinuierlichen Prozess resultiert das Kernmaterial aus der Rückführung der abgetrennten Granulatfraktionen.

Für einen kontinuierlich fortlaufenden Prozess werden entsprechend Pufferbehälter bei den Prozessschritten der Schwermetallabtrennung und Granulation installiert, um die zeitliche Abfolge der parallel ablaufenden kontinuierlichen und diskontinuierlichen Prozessschritte sicherzustellen.

Das erzeugte Granulat weist nach der Einstellung der oben beschriebenen Gleichgewichtskreisläufe eine runde und kompakte Granulatform mit einem Granulatkorndurchmesser in einem Bereich von 2-5 mm auf, einen P2O5-Gesamtgehalt von 38 %, wobei davon 92 % ammoniumcitratlöslich und 61% wasserlöslich sind. Im erzeugten Düngergranulat sind ca. 41 % Komponenten der eingesetzten Klärschlammasche enthalten. Ohne Schwermetallabtrennung würde sich daraus folglich eine Konzentration für Blei von 73 mg/kg, für Nickel 31 mg/kg und für Cadmium 7 mg/kg durch den Eintrag mit der Klärschlammasche ergeben. Ermittelt wurden hingegen für Blei 21 mg/kg, für Nickel 6 mg/kg und für Cadmium 2 mg/kg. Durch die Schwermetallabtrennung werden somit vorteihafterweise jeweils mehr als 50 % der mit der Asche eingetragenen Schwermetalle Ni, Pb und Cd abgetrennt.

### Ausführungsbeispiel 6 (erfindungsgemäß):

In einem Mischbehälter werden 50 kg Wasser und 40 kg Salpetersäure (65 %) als Reaktionsmittel vorgelegt und vermischt, dazu werden 100 kg Klärschlammasche als anorganisches Sekundärphosphat (P2O5-Gehalt 21,0 %, davon neutral-ammoniumcitratlöslich 38 % und <1 % wasserlöslich; Schwermetallgehalte von 178 mg/kg Pb; 75 mg/kg Ni und 18,3 mg/kg Cd) zugegeben und die so erzeugte Rohstoffdispersion gemischt. Nachdem die Komponenten zusammengeführt wurden, wird eine Inkubationszeit von 25 Minuten eingehalten, wobei in dieser Zeit weiter gerührt wird. Durch die Einwirkung des Reaktionsmittels auf die Klärschlammasche und den sich einstellenden pH-Wert von ca. 0,5 sind nach der Inkubationszeit anteilig Phosphat, anteilig Schwermetalle und weitere Stoffe gelöst. Nach der Inkubationszeit werden der Rohstoffdispersion analog Ausführungsbeispiel 5 500 kg der von den Schwermetallen zumindest teilweise gereinigten, jedoch weiterhin nährstoffhaltigen flüssigen Phase aus dem Prozessschritt der Schwermetallabtrennung zugeführt.

Anschließend wird anders als in Ausführungsbeispiel 5 der pH-Wert dieser Rohstoffdispersion durch Natronlauge unter Rühren auf 2 eingestellt. Dadurch fällt der größte Teil des zuvor gelösten Phosphates aus, wohingegen die gelösten Schwermetalle wie Blei, Nickel und Cadmium, weitgehend gelöst bleiben. Diese so konditionierte Rohstoffdispersion wird einem Filter zugeführt und dort werden 500 kg flüssige Phase von der Rohstoffdispersion abgetrennt. In dem entleerten Mischbehälter kann eine neue Mischung analog zu der obigen Beschreibung für einen fortlaufenden Prozess beginnen. Ein wesentlicher Unterschied zum Ausführungsbeispiel 5 besteht darin, dass die abgetrennte Phase zwar die gelösten Schwermetalle, weitgehend jedoch kein gelöstes Phosphat enthält.

Anders als im Ausführungsbeispiel 5 erfolgt die teilweise Schwermetallabscheidung in Ausführungsbeispiel 6vorzugsweise nicht mittels Opfermetall, sondern durch selektive Fällung der Schwermetalle durch pH-Wertanhebung. Dazu wird die abgetrennte flüssige Phase mit dem eingestellten pH-Wert von 2 einem Gefäß zugeführt und dort der pH-Wert auf 5 eingestellt und für ca. 30 Minuten gerührt. Dabei fällt der größte Teil der gelösten Schwermetalle aus und wird entsprechend nach dem Ausfällen abgefiltert. Das Filtrat ist nun schwermetallarm und wird analog zu Ausführungsbeispiel 5 der Rohstoffdispersion vor der teilweisen Abtrennung der flüssigen Phase im Kreislauf zurückgeführt.

Die aus der Abtrennung der flüssigen Phase verbleibendende Rohstoffdispersion mit reduzierter flüssiger Phase weist einen wesentlich kleineren Anteil an nicht abgetrennter flüssiger Phase auf als Ausführungsbeispiel 5, der Feststoffanteil ist also wesentlich höher und wird in einen Intensivmischer der Fa. Eirich überführt. Zusätzlich werden 20 kg elementarer Schwefel als feines Pulver, 40 kg Harnstoff und 240 kg Struvit, das zuvor bevorzugt auf Pulverfeinheit aufgemahlen wurde, zugegeben und alles zusammen wird intensiv in einem Intensivmischer (Fa. Eirich R16W) gemischt. Dabei bilden sich Grüngranulate, die anschließend bei 110 °C getrocknet und in Granulatkörner mit einem Durchmesser in einem Bereich von 2 - 5 mm fraktioniert werden. Die Fraktion mit einem Granulatkorndurchmesser von kleiner als 2 mm und die Fraktion mit einem Granulatkorndurchmesser von größer als 5 mm werden nach vorheriger Aufmahlung der Granulation zurückgeführt.

Der gesamte Prozess wird fortlaufend wiederholt, wozu entsprechende Pufferbehälter bei den Prozessschritten der Schwermetallabtrennung und Granulation integriert sind, um die zeitliche Abfolge der parallel ablaufenden kontinuierlichen und diskontinuierlichen Prozessschritte sicherzustellen.

Das erzeugte Granulat weist nach der Einstellung der oben beschriebenen Gleichgewichtskreisläufe einen P2O5-Gesamtgehalt von 27 %, wobei davon 97 % ammoniumcitratlöslich und 18 % wasserlöslich sind, einen N-Gehalt von 12 % und einen S-Gehalt von 6,5 % auf. Im erzeugten Düngergranulat sind ca. 32 % Komponenten der eingesetzten Klärschlammasche enthalten. Ohne Schwermetallabtrennung würde sich daraus folglich eine Konzentration für Blei von 57 mg/kg, für Nickel 24 mg/kg und für Cadmium 6 mg/kg ergeben. Ermittelt wurden hingegen für Blei von 16 mg/kg, für Nickel 5 mg/kg und für Cadmium 2 mg/kg. Durch die Schwermetallabtrennung werden somit jeweils mehr als 50 % der mit der Asche eingetragenen Schwermetalle abgetrennt.

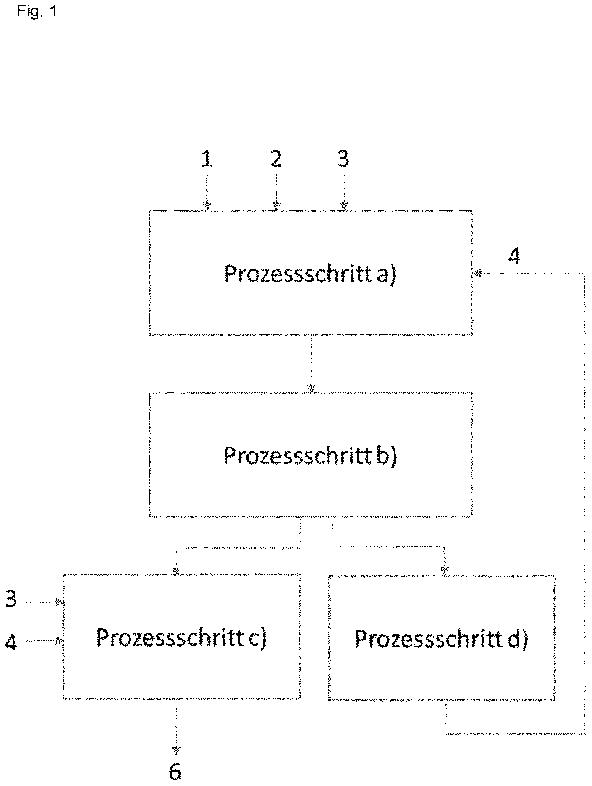

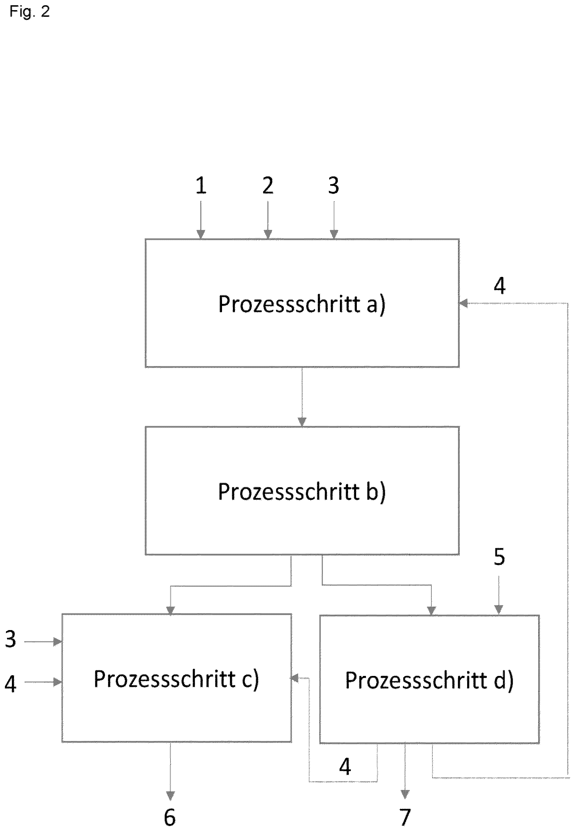

Die Erfindung wird anhand der nachfolgenden Figuren näher beschrieben. Die Figuren 1 und 2 zeigen jeweils eine schematische Darstellung von bevorzugten Ausführungsformen des vorgeschlagenen Verfahrens in zwei Ausführungsformen.

Figur 1 beschreibt eine bevorzugte Ausführungsform des vorgeschlagenen Verfahrens ohne optional mögliche Abtrennung von Schwermetallen. Die in Figur 1 dargestellte bevorzugte Ausführungsform des vorgeschlagenen Verfahrens wird vorzugsweise als "Grundausführungsform" des Verfahrens bezeichnet. Die Grundausführungsform nutzt im Wesentlichen vollständig die verfahrenstechnischen Vorteile durch die Erzeugung der erfindungsgemäßen Rohstoffdispersion mit einem hohen Anteil an flüssiger Phase.

Anders als bei Verfahren aus dem Stand der Technik wird zunächst eine Rohstoffdispersion mit hohem Flüssigphasenanteil erzeugt, wobei der hohe Flüssigphasenanteil vorteilhafterweise als Puffer für die ablaufende Reaktion wirkt. Dadurch werden die beim Mischen des phosphathaltigen Sekundärrohstoffes mit der Mineralsäure häufig spontan ablaufenden und zum Teil sehr exothermen Reaktionen kontrollier- und steuerbar und das Gemisch zeigt keine störende Klebrigkeit. Erst nach weitgehend erfolgter Reaktion zwischen anorganischem Sekundärphosphat (1) und dem Reaktionsmittel (2) erfolgt die Weiterverarbeitung bis hin zum Granulat. Die Reaktion der Phosphatumwandlung ist somit vorteilhafterweise vom Prozess der Granulation getrennt.

Der vorgeschlagene Ablauf der Reaktion zwischen anorganischem Sekundärphosphat (1) und Reaktionsmittel (2) in einer Rohstoffdispersion mit hohem Flüssigphasenanteil hat insbesondere die beschriebenen verfahrenstechnischen Vorteile. Wenn die Rohstoffdispersion direkt granuliert werden soll, muss ein sehr hoher Wasseranteil durch zum Beispiel Trocknung abgetrennt werden, was allerdings kostenintensiv ist. Entsprechend wird im vorgeschlagenen Verfahren ein Teil der flüssigen Phase im Kreislauf gefahren und entsprechend vor der Granulation mechanisch abgetrennt und der Herstellung der Rohstoffdispersion wieder zugeführt.

Im Prozessschritt a) wird zumindest aus einem anorganischen Sekundärphosphat (1) und mindestens einem Reaktionsmittel (2) eine Rohstoffdispersion erzeugt. Zur ausreichenden Reaktion zwischen dem mindestens eine Reaktionsmittel (2) und dem mindestens einem anorganischen Sekundärphosphat (1) wird eine Inkubationszeit abgewartet, wobei die Rohstoffdispersion weiter gemischt werden kann. Es ist vorgesehen, dass das Reaktionsmittel (2) zumindest mit Teilen des durch das anorganische Sekundärphosphat (1) eingebrachten Phosphates reagiert, um dadurch die Löslichkeit und Pflanzenverfügbarkeit dieses Phosphates zu erhöhen. Im Prozessschritt a) können der Rohstoffdispersion zusätzlich weitere Komponenten (3), wie beispielsweise nährstoffhaltige Komponenten, Dispergier- und Entschäumungsmittel, Strukturstoffe, Mittel zur pH-Werteinstellung, Urease-Hemmer, Ammonium-Stabilisatoren und/oder Wasser, zugegeben werden. Auch kann die im Prozessschritt d) von Schwermetallen zumindest teilweise gereinigte flüssige Phase (4) zugeführt und beispielsweise zur Einstellung des Fest-Flüssige-Verhältnisses genutzt werden.

Im Prozessschritt b) wird aus der im Prozessschritt a) erzeugten Rohstoffdispersion ein Teil der flüssigen Phase abgetrennt und Prozessschritt d) zugeführt. Der verbleibende Rückstand aus dem festen bzw. ungelösten Anteil der Rohstoffsuspension mit dem verbleibenden Anteil der flüssigen Phase, die vorzugsweise die nicht abgetrennt wird, wird dem Prozessschritt c) zugeführt.

Im Prozessschritt c) erfolgt die Granulierung und/oder Extrusion der verbleibenden Rohstoffdispersion mit reduzierter flüssiger Phase aus Prozessschritt b). Je nach eingestelltem Flüssigkeit-Feststoffverhältnis können verschiedene Granulations-bzw. Extrusionsverfahren angewendet werden. Vor und/oder während der Granulierung können weitere Komponenten (3) und/oder schwermetallarme flüssige Phase aus Prozessschritt d) zugeführt werden. Aus diesem Prozessschritt c) resultieren boden- und pflanzenspezifischen Düngergranulaten (6) mit eingestellter und gleichbleibender Nährstoffzusammensetzung, wobei zumindest als eine Nährstoffquelle anorganisches Sekundärphosphat, wie beispielsweise Klärschlammaschen, eingesetzt werden kann, wobei das darin enthaltene Phosphat durch Einwirken des Reaktionsmittels besonders gut pflanzenverfügbar gemacht wird und die im anorganischen Sekundärphosphat enthaltenen Schwermetalle zumindest teilweise abgetrennt werden.

Im Prozessschritt d) erfolgt die Rückführung der flüssigen Phase (4) zur Herstellung einer Rohstoffdispersion analog zu Prozessschritt a).

Die Prozessschritte a) bis d) werden beliebig oft wiederholt, was vorzugsweise als Prozessschritt e) bezeichnet wird.

Die Figur 2 zeigt eine bevorzugte Ausführungsform des vorgeschlagenen Verfahrens umfassend eine zumindest teilweise Abtrennung der Schwermetalle. Im Unterschied zu der Figur 1 dargestellten bevorzugten Ausführungsform des Verfahrens wird im Prozessschritt a) das Reaktionsmittel (2) nicht nur zumindest mit Teilen des durch das anorganische Sekundärphosphat (1) eingebrachten Phosphates zum Reagieren gebracht, sondern zudem soll das Reaktionsmittel (2) einen möglichst hohen Anteil an Schwermetallen aus dem anorganischen Sekundärphosphat (1) herauslösen.

Die Prozessschritte b) und c) verlaufen im Wesentlichen vergleichbar zu der in Figur 1 dargestellten Ausführungsform der Erfindung. Im Prozessschritt d) erfolgt jedoch das zumindest teilweise Absondern von Schwermetallen (7) aus der im Prozessschritt b) abgetrennten flüssigen Phase sowie eine Ausschleusung dieser Schwermetalle (7) aus dem Prozess, wobei die schwermetallarmen flüssige Phase (4) anschließend zur Herstellung einer Rohstoffdispersion analog zu Prozessschritt a) und/oder in den Prozessschritt c) zurückgeführt werden kann. Zur Abtrennung der Schwermetalle können unterschiedliche Verfahren genutzt werden, je nach Art und Konzentration der abzutrennenden Schwermetalle bzw. der Konditionierung der abgetrennten flüssigen Phase aus Prozessschritt b). Je nach Art des Abtrennungsverfahrens werden Additive zur Schwermetallabtrennung (5), wie beispielsweise Fällungs- und Flockungsmittel, Mittel zur pH-Wert-Einstellung, Opfermetalle und/oder Extraktionsmittel verwendet. Die Prozessschritte a) bis d) können beliebig oft wiederholt werden.

### Bezugszeichenliste:

- 1: anorganisches Sekundärphosphat
- 2: Reaktionsmittel
- 3: weitere Komponente
- 4: flüssige Phase
- 5: Schwermetallabtrennung
- 6: Düngergranulat
- 7: Schwermetalle

## Patentansprüche

1. Pedosphärenverbesserndes Granulat (6) herstellbar mit einem Verfahren umfassend die Schritte:
a) Erzeugung einer Rohstoffdispersion umfassend mindestens ein anorganisches Sekundärphosphat (1) und mindestens ein Reaktionsmittel (1), wobei der Anteil an einer flüssigen Phase (4) in der Rohstoffdispersion größer 30 Gew.-% ist, bei einer Inkubationszeit zwischen anorganischem Sekundärphosphat (1) und Reaktionsmittel (2) zwischen 1 bis 100 Minuten,
b) Abtrennung eines Teils der flüssigen Phase (4) der Rohstoffdispersion,
c) Granulierung und/oder Extrudierung der verbleibenden Rohstoffdispersion mit reduzierter flüssiger Phase (4),
d) entweder Rückführung der im Prozessschritt b) abgetrennten flüssigen Phase (4) ohne zumindest teilweise Schwermetallabtrennung (5) in den Prozessschritt a) zur Herstellung einer Rohstoffdispersion
oder zumindest teilweises Absondern von Schwermetallen (7) aus der im Prozessschritt b) abgetrennten flüssigen Phase (4) sowie Ausschleusung dieser Schwermetalle (7) aus dem Prozess mit anschließender Rückführung der schwermetallarmen abgetrennten flüssige Phase (4) zur Herstellung einer Rohstoffdispersion analog Prozessschritt a) und/oder in den Prozessschritt c) und
e) Wiederholen der Prozessschritte a) bis d),
wobei das mindestens eine Reaktionsmittel ausgewählt ist aus organischen Säuren, anorganischen Säuren, Säuregemischen, Laugen oder Gemischen aus unterschiedlichen Laugen, jeweils in unverdünnter oder verdünnter Form,
wobei der P₂O₅-Anteil des pedosphärenverbessernden Granulates (6) eine Neutralammoniumcitratlöslichkeit von größer als 60 Gew.-% und eine Wasserlöslichkeit von kleiner als 40 Gew.-%, bezogen auf den Gesamtphosphatgehalt des Granulates, aufweist, und
wobei die Neutralammoniumcitratlöslichkeit des P₂O₅-Anteils des pedosphärenverbessernden Granulates (6) durch die Reaktion mit dem Reaktionsmittel um mindestens 20 % höher gegenüber dem mindestens einen anorganischen Sekundärphosphat (1) ist.

2. Verfahren zur Herstellung eines pedosphärenverbessernden Granulats (6) umfassend die folgenden Schritte:
a) Erzeugung einer Rohstoffdispersion umfassend mindestens ein anorganisches Sekundärphosphat (1) und mindestens ein Reaktionsmittel (2),
wobei der Anteil an einer flüssigen Phase (4) in der Rohstoffdispersion größer 30 Gew.-% ist, bei einer Inkubationszeit zwischen anorganischem Sekundärphosphat (1) und Reaktionsmittel (2) zwischen 1 bis 100 Minuten, wobei das Reaktionsmittel zumindest einen Teil des durch das anorganische Sekundärphosphat zugeführten Phosphates löst und/oder mit diesen reagiert,
b) Abtrennung eines Teils der flüssigen Phase (4) der Rohstoffdispersion,
c) Granulierung und/oder Extrudierung der verbleibenden Rohstoffdispersion mit reduzierter flüssiger Phase (4),
d) entweder Rückführung der im Prozessschritt b) abgetrennten flüssigen Phase (4) ohne zumindest teilweise Schwermetallabtrennung (5) in den Prozessschritt a) zur Herstellung einer Rohstoffdispersion
oder zumindest teilweises Absondern von Schwermetallen (7) aus der im Prozessschritt b) abgetrennten flüssigen Phase (4) sowie Ausschleusung dieser Schwermetalle (7) aus dem Prozess mit anschließender Rückführung der schwermetallarmen abgetrennten flüssige Phase (4) zur Herstellung einer Rohstoffdispersion analog Prozessschritt a) und/oder in den Prozessschritt c) und
e) Wiederholen der Prozessschritte a) bis d),
wobei das mindestens eine Reaktionsmittel ausgewählt ist aus organischen Säuren, anorganischen Säuren, Säuregemischen, Laugen oder Gemischen aus unterschiedlichen Laugen, jeweils in unverdünnter oder verdünnter Form,
wobei der P₂O₅-Anteil des erhaltenen pedosphärenverbessernden Granulates (6) eine Neutralammoniumcitratlöslichkeit von größer als 60 Gew.-% und eine Wasserlöslichkeit von kleiner als 40 Gew.-%, bezogen auf den Gesamtphosphatgehalt des Granulates, aufweist.

3. Granulat (6) nach Anspruch 1 oder Verfahren nach Anspruch 2,
**dadurch gekennzeichnet, dass**
ein pH-Wert der erzeugten Rohstoffdispersion vor der teilweisen Abtrennung der flüssigen Phase (4) in einem Bereich zwischen 1,5 bis 3,5 liegt.

4. Granulat (6) nach Anspruch 1 oder 3 oder Verfahren nach Anspruch 2 oder 3,
**dadurch gekennzeichnet, dass**
das zumindest teilweises Absondern von Schwermetallen (7) aus der im Prozessschritt b) abgetrennten flüssigen Phase (4) durch eine oder mehrere Fällungsreaktionen und anschließender Abtrennung der Fällungsprodukte erfolgt.

5. Granulat (6) nach einem oder mehreren der Ansprüche 1, 3 oder 4, oder Verfahren nach einem oder mehreren der Ansprüche 2-4,
**dadurch gekennzeichnet, dass**
ein pH-Wert der erzeugten Rohstoffdispersion vor und während der teilweisen Abtrennung der flüssigen Phase (4) kleiner als 2 ist.

6. Granulat (6) nach einem oder mehreren der Ansprüche 1, 3-5, oder Verfahren nach einem oder mehreren der Ansprüche 2-5,
**dadurch gekennzeichnet, dass**
das zumindest teilweises Absondern von Schwermetallen (7) aus der im Prozessschritt b) abgetrennten flüssigen Phase durch ein oder mehrere selektive Abtrennungsverfahren erfolgt.

7. Granulat (6) nach einem oder mehreren der Ansprüche 1, 3-6, oder Verfahren nach einem oder mehreren der Ansprüche 2-6,
**dadurch gekennzeichnet, dass**
die Rohstoffdispersion mit reduzierter flüssiger Phase (4) aus Prozessschritt b) einen Feuchtegehalt zwischen 10 und 40 Gew.-% aufweist.

8. Granulat (6) nach einem oder mehreren der Ansprüche 1 oder 3-7 oder Verfahren einem oder mehreren der Ansprüche 2-7,
**dadurch gekennzeichnet, dass**
▪ die in Prozessschritt b) abgetrennte flüssige Phase (4) einer zumindest teilweisen Schwermetallabtrennung (5) zugeführt wird,
▪ die zumindest teilweise von den Schwermetallen (7) gereinigte abgetrennte flüssige Phase (4) anschließend in den Prozessschritt a) zur Herstellung einer Rohstoffsuspension zugeführt wird, wobei das Reaktionsmittel (2) vor oder bei der Rückführung in den Prozessschritt a) zumindest teilweise dieser flüssigen Phase (4) zuführbar ist,
▪ die Rohstoffdispersion mit reduzierter flüssiger Phase (4) nach Prozessschritt b) einen Feststoffgehalt von 40 Gew.-% bis 70 Gew.-% aufweist und
▪ die Rohstoffdispersion mit reduzierter flüssiger Phase (4) einer Granulierung zugeführt wird.

9. Granulat (6) nach einem oder mehreren der Ansprüche 1 oder 3-8 oder Verfahren einem oder mehreren der Ansprüche 2-8,
**dadurch gekennzeichnet, dass**
sich nach der Granulierung eine Fraktionierung des erzeugten Nährstoffgranulates (6) anschließt, wobei eine Grobfraktion und/oder eine Feinfraktion aufgemahlen und dem Schritt a), b) und/oder c) zumindest teilweise zuführbar ist.

10. Granulat nach einem oder mehreren der Ansprüche 1 oder 3-9 oder Verfahren einem oder mehreren der Ansprüche 2-9,
**dadurch gekennzeichnet, dass**
in Summe 1 bis 70 Gew.-% Kristallisationsprodukte aus einer Phosphorelimination dem Schritt a), b) und/oder c) zuführbar sind.

11. Granulat nach einem oder mehreren der Ansprüche 1 oder 3-10 oder Verfahren einem oder mehreren der Ansprüche 2-10,
**dadurch gekennzeichnet, dass**
eine Trocknung oberhalb 100°C bezogen auf die Materialtemperatur bei der Trocknung erfolgt.

12. Granulat nach einem oder mehreren der Ansprüche 1 oder 3-11 oder Verfahren einem oder mehreren der Ansprüche 2-11,
**dadurch gekennzeichnet, dass**
das Granulat in Summe 0,1 bis 25 % Gew.-% Huminsäure, Fulvosäure, deren Salze (Humate, Fulvate) und/oder in Summe 0,1 bis 30 % Gew.-% organische Säure und/oder in Summe 0,1 bis 50 % Gew.-% Strukturstoffe aufweist.

13. Verwendung des Düngergranulats (6) nach Anspruch 1 oder 3-12 zur Nährstoffzufuhr in der Land-, Forstwirtschaft und/oder im Gartenbau
**dadurch gekennzeichnet, dass**
das Düngergranulat (6) mindestens ein anorganisches Sekundärphosphat (1) umfasst, sowie einen größer 60 Gew.-% neutral-ammoniumcitratlöslichen P₂O₅-Anteil.

## Claims

1. Pedosphere-improving granulate (6) producible by a method comprising the steps of
a) production of a raw material dispersion comprising at least one inorganic secondary phosphate (1) and at least one reactant (1), wherein the proportion of a liquid phase (4) in the raw material dispersion is greater than 30% by weight, with an incubation time between the inorganic secondary phosphate (1) and the reactant (2) of between 1 and 100 minutes,
b) separation of a part of the liquid phase (4) of the raw material dispersion,
c) granulation and/or extrusion of the remaining raw material dispersion with reduced liquid phase (4),
d) either recirculation of the liquid phase (4) separated in process step b) without at least partial heavy metal separation (5) into process step a) for the production of a raw material dispersion,
or at least partial separation of heavy metals (7) from the liquid phase (4) separated in process step b) and discharge of these heavy metals (7) from the process with subsequent recycling of the separated low-heavy metal liquid phase (4) for the production of a raw material dispersion analogously to process step a) and/or to process step c) and
e) repeating process steps a) to d),
wherein the at least one reactant is selected from organic acids, inorganic acids, acid mixtures, bases or mixtures of different bases, in undiluted or diluted form respectively,
wherein the P₂O₅ content of the pedosphere-improving granulate (6) has a neutralammonium citrate solubility of greater than 60 % by weight and a water solubility of less than 40 % by weight, in relation to the total phosphate content of the granulate, and
wherein the neutral ammonium citrate solubility of the P₂O₅ portion of the pedosphere-improving granulate (6) is at least 20% higher than that of the at least one inorganic secondary phosphate (1) due to the reaction with the reactant.

2. Method for producing a pedosphere-improving granulate (6), comprising the following steps:
a) producing a raw material dispersion comprising at least one inorganic secondary phosphate (1) and at least one reactant (2),
wherein the proportion of a liquid phase (4) in the raw material dispersion is greater than 30% by weight, with an incubation time between the inorganic secondary phosphate (1) and the reactant (2) of between 1 and 100 minutes, wherein the reactant dissolves at least part of the phosphate supplied by the inorganic secondary phosphate and/or reacts with it,
b) separation of a portion of the liquid phase (4) of the raw material dispersion,
c) granulation and/or extrusion of the remaining raw material dispersion with reduced liquid phase (4),
d) either recirculation of the liquid phase (4) separated in process step b) without at least partial heavy metal separation (5) into process step a) for the production of a raw material dispersion
or at least partially separating heavy metals (7) from the liquid phase (4) separated in process step b) and discharging these heavy metals (7) from the process, with subsequent recycling of the separated low-heavy metal liquid phase (4) for the production of a raw material dispersion analogously to process step a) and/or to process step c) and
e) repeating process steps a) to d),
wherein the at least one reactant is selected from organic acids, inorganic acids, acid mixtures, bases or mixtures of different bases, in undiluted or diluted form respectively,
wherein the P₂O₅ content of the resulting pedosphere-improving granulate (6) has a neutral ammonium citrate solubility of greater than 60% by weight and a water solubility of less than 40% by weight, in relation to the total phosphate content of the granulate.

3. Granulate (6) according to claim 1 or method according to claim 2,
**characterized in that**
a pH value of the produced raw material dispersion before the partial separation of the liquid phase (4) is in a range between 1.5 and 3.5.

4. Granulate (6) according to claim 1 or 3 or method according to claim 2 or 3,
**characterized in that**
the at least partial separation of heavy metals (7) from the liquid phase (4) separated in process step b) is carried out by one or more precipitation reactions and subsequent separation of the precipitates.

5. Granulate (6) according to one or more of claims 1, 3 or 4, or method according to one or more of claims 2-4,
**characterized in that**
a pH value of the produced raw material dispersion before and during the partial separation of the liquid phase (4) is smaller than 2.

6. Granulate (6) according to one or more of claims 1, 3-5, or method according to one or more of claims 2-5,
**characterized in that**
the at least partial separation of heavy metals (7) from the liquid phase separated in process step b) is carried out by one or more selective separation processes.

7. Granulate (6) according to one or more of claims 1, 3-6, or method according to one or more of claims 2-6,
**characterized in that**
the raw material dispersion with reduced liquid phase (4) from process step b) has a moisture content of between 10 and 40 % by weight.

8. Granulate (6) according to one or more of claims 1 or 3-7 or method according to one or more of claims 2-7,
**characterized in that**
▪ the liquid phase (4) separated in process step b) is subjected to an at least partial heavy metal separation (5),
▪ the separated liquid phase (4) which has been at least partially purified from the heavy metals (7) is then fed into process step a) for the production of a raw material suspension, wherein the reactant (2) can be at least partially fed into this liquid phase (4) before or during the recirculation into process step a),
▪ the raw material dispersion with reduced liquid phase (4) after process step b) has a solids content of 40% to 70% by weight and
▪ the raw material dispersion with reduced liquid phase (4) is fed to a granulation step.

9. Granulate (6) according to one or more of claims 1 or 3-8 or method according to one or more of claims 2-8,
**characterized in that**
the granulation is followed by fractionation of the produced nutrient granulate (6), wherein a coarse fraction and/or a fine fraction being ground and at least partly feedable to step a), b) and/or c).

10. Granulate according to one or more of claims 1 or 3-9 or method according to one or more of claims 2-9,
**characterized in that**
a total of 1 to 70% by weight of crystallization products from a phosphorus elimination can be fed to step a), b) and/or c).

11. Granulate according to one or more of claims 1 or 3-10 or method according to one or more of claims 2-10,
**characterized in that**
drying is carried out at above 100°C relative to the material temperature during drying.

12. Granulate according to one or more of claims 1 or 3-11 or method according to one or more of claims 2-11,
**characterized in that**
the granulate contains a total of 0.1 to 25% by weight of humic acid, fulvic acid, their salts (humates, fulvates) and/or a total of 0.1 to 30% by weight of organic acid and/or a total of 0.1 to 50% by weight of texturizing substances.

13. Use of the fertilizer granulate (6) according to claim 1 or 3-12 for supplying nutrients in agriculture, forestry and/or horticulture
**characterized in that**
the fertilizer granulate (6) comprises at least one inorganic secondary phosphate (1) and a neutral ammonium citrate soluble P₂O₅ content of more than 60% by weight.

## Revendications

1. Granulé améliorant la pédosphère (6) pouvant être préparé à l'aide d'un procédé comprenant les étapes consistant à :
a) réaliser une dispersion de matière première comprenant au moins un phosphate secondaire inorganique (1) et au moins un réactif (1), dans lequel la proportion d'une phase liquide (4) dans la dispersion de matière première est supérieure à 30 % en poids, avec un temps d'incubation entre le phosphate secondaire inorganique (1) et le réactif (2) compris entre 1 et 100 minutes,
b) séparer une partie de la phase liquide (4) de la dispersion de matière première,
c) granuler et/ou extruder la dispersion de matière première restante avec une phase liquide réduite (4),
d) soit retourner la phase liquide (4) séparée au cours de l'étape de procédé b) sans séparation au moins partielle des métaux lourds (5) au cours de l'étape de procédé a) pour préparer une dispersion de matière première
soit isoler au moins partiellement les métaux lourds (7) de la phase liquide (4) séparée au cours de l'étape de procédé b) ainsi qu'éliminer ces métaux lourds (7) du procédé avec retour ultérieur de la phase liquide séparée (4) appauvrie en métaux lourds pour préparer une dispersion de matière première selon l'étape de procédé a) et/ou au cours l'étape de procédé c) et
e) répéter les étapes de procédé a) à d),
dans lequel l'au moins un réactif est choisi parmi les acides organiques, les acides inorganiques, les mélanges d'acides, les alcalis ou les mélanges de différents alcalis, chacun sous forme non diluée ou diluée,
dans lequel la partie de P₂O₅ dans le granulé améliorant la pédosphère (6) présente une solubilité dans le citrate d'ammonium neutre supérieure à 60 % en poids et une solubilité dans l'eau inférieure à 40 % en poids, sur la base de la teneur totale en phosphate du granulé, et
dans lequel la solubilité dans le citrate d'ammonium neutre de la partie P₂O₅ du granulé améliorant la pédosphère (6) est au moins 20 % supérieure à celle de l'au moins un phosphate secondaire inorganique (1) en raison de la réaction avec le réactif.

2. Procédé de préparation d'un granulé améliorant la pédosphère (6) comprenant les étapes suivantes :
a) réalisation d'une dispersion de matière première comprenant au moins un phosphate secondaire inorganique (1) et au moins un réactif (2), dans lequel la proportion d'une phase liquide (4) dans la dispersion de matière première est supérieure à 30 % en poids, avec un temps d'incubation entre le phosphate secondaire inorganique (1) et le réactif (2) compris entre 1 et 100 minutes, dans lequel le réactif dissout au moins une partie du phosphate amené par le phosphate secondaire inorganique et/ou réagit avec celle-ci,
b) séparation d'une partie de la phase liquide (4) de la dispersion de matière première,
c) granulation et/ou extrusion de la dispersion de matière première restante avec une phase liquide réduite (4),
d) soit retour de la phase liquide (4) séparée au cours de l'étape de procédé b) sans séparation au moins partielle des métaux lourds (5) au cours de l'étape de procédé a) pour préparer une dispersion de matière première
soit isolation au moins partielle des métaux lourds (7) de la phase liquide (4) séparée au cours de l'étape de procédé b) ainsi qu'élimination de ces métaux lourds (7) du procédé avec retour ultérieur de la phase liquide séparée (4) appauvrie en métaux lourds pour préparer une dispersion de matière première selon l'étape de procédé a) et/ou au cours l'étape de procédé c) et
e) répétition des étapes de procédé a) à d),
dans lequel l'au moins un réactif est choisi parmi les acides organiques, les acides inorganiques, les mélanges d'acides, les alcalis ou les mélanges de différents alcalis, chacun sous forme non diluée ou diluée,
dans lequel la partie de P₂O₅ dans le granulé améliorant la pédosphère (6) obtenu présente une solubilité dans le citrate d'ammonium neutre supérieure à 60 % en poids et une solubilité dans l'eau inférieure à 40 % en poids, sur la base de la teneur totale en phosphate du granulé.

3. Granulé (6) selon la revendication 1 ou procédé selon la revendication 2,
**caractérisé en ce que**
une valeur de pH de la dispersion de matière première produite avant la séparation partielle de la phase liquide (4) se situe dans une plage comprise entre 1,5 et 3,5.

4. Granulé (6) selon la revendication 1 ou 3 ou procédé selon la revendication 2 ou 3,
**caractérisé en ce que**
l'isolation au moins partielle de métaux lourds (7) de la phase liquide (4) séparée au cours l'étape de procédé b) s'effectue par une ou plusieurs réactions de précipitation et séparation ultérieure des produits de précipitation.

5. Granulé (6) selon une ou plusieurs des revendications 1, 3 ou 4, ou procédé selon une ou plusieurs des revendications 2 à 4,
**caractérisé en ce que**
une valeur de pH de la dispersion de matière première produite avant et pendant la séparation partielle de la phase liquide (4) est inférieure à 2.

6. Granulé (6) selon une ou plusieurs des revendications 1, 3 à 5, ou procédé selon une ou plusieurs des revendications 2 à 5,
**caractérisé en ce que**
l'isolation au moins partielle de métaux lourds (7) de la phase liquide séparée au cours l'étape de procédé b) s'effectue par un ou plusieurs procédés de séparation sélective.

7. Granulé (6) selon une ou plusieurs des revendications 1, 3 à 6, ou procédé selon une ou plusieurs des revendications 2 à 6,
**caractérisé en ce que**
la dispersion de matière première avec phase liquide réduite (4) issue de l'étape de procédé b) présente une teneur en humidité comprise entre 10 et 40 % en poids.

8. Granulé (6) selon une ou plusieurs des revendications 1, ou 3 à 7, ou procédé selon une ou plusieurs des revendications 2 à 7,
**caractérisé en ce que**
▪ la phase liquide (4) séparée au cours de l'étape de procédé b) est amenée à une séparation au moins partielle des métaux lourds (5),
▪ la phase liquide séparée (4), au moins partiellement purifiée des métaux lourds (7), est ensuite amenée à l'étape de procédé a) pour produire une suspension de matière première, dans lequel le réactif (2) peut être au moins partiellement amenée à cette phase liquide avant ou lors du retour au cours de l'étape de procédé a) (4),
▪ la dispersion de matière première avec phase liquide réduite (4) après l'étape de procédé b) présente une teneur en matières solides de 40 % en poids à 70 % en poids et
▪ la dispersion de matière première avec une phase liquide réduite (4) est amenée à la granulation.

9. Granulé (6) selon une ou plusieurs des revendications 1, ou 3 à 8, ou procédé selon une ou plusieurs des revendications 2 à 8,
**caractérisé en ce que**
un fractionnement du granulé nutritif (6) produit suit la granulation, dans lequel une fraction grossière et/ou une fraction fine est broyée et peut être amenée au moins partiellement à l'étape a), b) et/ou c).

10. Granulé selon une ou plusieurs des revendications 1, ou 3 à 9, ou procédé selon une ou plusieurs des revendications 2 à 9,
**caractérisé en ce que**
un total de 1 à 70 % en poids de produits de cristallisation issus de l'élimination du phosphore peuvent être amenés à l'étape a), b) et/ou c) .

11. Granulé selon une ou plusieurs des revendications 1, ou 3 à 10, ou procédé selon une ou plusieurs des revendications 2 à 10,
**caractérisé en ce que**
le séchage s'effectue au-dessus de 100°C en fonction de la température du matériau pendant le séchage.

12. Granulé selon une ou plusieurs des revendications 1, ou 3 à 11, ou procédé selon une ou plusieurs des revendications 2 à 11,
**caractérisé en ce que**
le granulé présente un total de 0,1 à 25 % en poids d'acide humique, d'acide fulvique, leurs sels (humates, fulvates) et/ou un total de 0,1 à 30 % en poids d'acide organique et/ou un total de 0,1 à 50 % en poids de matériaux de structure.

13. Utilisation du granulé d'engrais (6) selon la revendication 1 ou 3 à 12 pour l'alimentation en nutriments dans l'agriculture, la sylviculture et/ou l'horticulture
**caractérisé en ce que**
le granulé d'engrais (6) comprend au moins un phosphate secondaire inorganique (1), ainsi qu'une partie de P₂O₅ soluble dans le citrate d'ammonium neutre supérieur à 60 % en poids.
